# EUROPÄISCHE PATENTSCHRIFT

(11) **EP 1 363 965 B1**
(45) Veröffentlichungstag und Bekanntmachung des Hinweises auf die Patenterteilung: **20.12.2006**
(21) Anmeldenummer: 02722116.7
(22) Anmeldetag: 21.02.2002
(51) Int. Cl.: C08G 81/02, B32B 27/28

(54) **THERMOPLASTISCHE BLOCKCOPOLYMERE AUS POLYALKYL(METH)ACRYLAT- UND POLYAMIDSEGMENTEN SOWIE DEREN VERWENDUNG**
THERMOPLASTIC BLOCK COPOLYMERS CONSISTING OF POLYALKYL(METH)ACRYLATE AND POLYAMIDE SEGMENTS AND THE USE THEREOF
COPOLYMERES BLOCS THERMOPLASTIQUES CONSTITUES DE SEGMENTS POLYAMIDE ET POLY(METH)ACRYLATE ET LEUR UTILISATION

(30) Priorität: 23.02.2001 DE 10108911; 25.07.2001 DE 10136286
(43) Veröffentlichungstag der Anmeldung: 26.11.2003
(73) Patentinhaber: EMS-Chemie AG, 7013 Domat/Ems (CH)
(72) Erfinder: HOFF, Heinz, CH-7015 Tamins (CH); HOFFMANN, Botho, CH-7013 Domat/Ems (CH)
(74) Vertreter: Becker Kurig Straus
(86) Internationale Anmeldenummer: PCT/EP2002/001858
(87) Internationale Veröffentlichungsnummer: WO 2002/074836

(56) Entgegenhaltungen:
- EP-A- 0 708 115
- DE-A- 4 314 111
- DE-A- 19 624 813
- US-A- 4 501 861

## Beschreibung

Die vorliegende Erfindung betrifft neuartige, durch Polykondensation herstellbare thermoplastische Blockcopolymere, bestehend aus Poly(meth)acrylat- und Polyamid-Segmenten, deren Herstellung sowie deren Verwendung. Die erfindungsgemäßen Blockcopolymere zeigen eine einzigartige Kombination der Eigenschaften von Poly(meth)acrylaten und Polyamiden, können als Modifikatoren sowohl in Polyamid als auch in Poly(meth)acrylaten eingesetzt werden, dienen als Verträglichkeitsvermittler in Blends oder sind maßgeschneiderte Haftvermittler in Mehrschichtsystemen, wie z. B. Mehrschichtpolymerrohren.

Die Polyamide gehören zu den wichtigsten technischen Thermoplasten mit vielfältigen Anwendungen in den verschiedensten Gebieten. Diese Vielfalt resultiert aus der Tatsache, daß Polyamide auf mannigfache Art modifizierbar sind und so maßgeschneiderte Produkte hergestellt werden können. Neben dem Einbringen von Verstärkungs- und Füllmaterialien, dem Blenden mit anderen Polymeren, der Zugabe von verschiedensten Additiven bietet die Copolymerbildung eine wichtige Art gezielt die Eigenschaften der Polyamide zu beeinflussen. Unter den linearen Blockpolymeren sind in der Literatur hauptsächlich solche bekannt, die neben dem Polyamid-segment Segmente auf der Basis von Polyethern, Polyester, Polysiloxanen, Polyimiden und Polycarbonaten (J. Stehlicek, J. Horsky, J. Roda, A. Moucha in "Lactam based Polyamides" Vol. 2, R. Puffr, V. Kubanek, Ed., CRC Press, Boca Raton 1991, 20 ff) beinhalten. Jedoch finden sich nur wenige Beispiele für die Kombination von Polyamid- und auf Vinylmonomeren beruhende Segmente. Eine Ausnahme bilden hier Blockcopolymere, bestehend aus Polyamid 6 und Poly-styrol, Poly(butadien-co-acrylnitril) (Colloid Polym. Sci. (1989), 267(1), 9-15), Poly(styrol-co-butadien), Polybutadien und Polyisobutylen.

Blockcopolymere aus Polyamid- und Poly(meth)acrylat-Segmenten sind ausgehend von hochmolekularen bzw. oligomeren Polyamiden bisher nur auf dem Weg der radikalischen Polymerisation von makromolekularen Initiatoren zugänglich. Entweder erfolgt die Synthese dieser Initiatoren ausgehend von Polyamidpräkondensaten, meist ausgestattet mit Aminoendgruppen, durch Umsetzung mit geeignet funktionalisierten, niedermolekularen Azo- oder Peroxo-Initiatoren (Polymer Journal 31 (10), 864-871) oder durch Nitrosierung eines handelsüblichen Polyamids und nachfolgende photochemische Umlagerung in den entspechenden hochmolekularen Diazoester (J. Polym. Sci., Polym. Chem. Ed. (1980), 18(6), 2011-20; J. Polym. Sci., Polym. Chem. Ed. (1982), 20(7), 1935-9). Durch radikalische Masse- oder Lösungspolymerisation, thermisch oder photochemisch induziert, können so AB, ABA oder auf dem Weg der Nitrosierung auch segmentierte Multiblockcopolymere hergestellt werden.

Beim photochemisch oder thermisch induzierten Zerfall der Diazoester entstehen meist Biradikale, die zu Verzweigungen und Vemetzungen Anlaß geben. Viele der Produkte sind daher gummiartig und unlöslich. Durch die hohe Übertragungsrate ist die Bildung von Pfropfpolymeren nicht zu vermeiden. Des weiteren werden die Eigenschaften dieser Copolymere praktisch vollständig durch die Vinylkomponente bestimmt. Die Ausbeute der Umsetzung mit MMA (Methylmethacrylat) ist unbefriedigend. Während für das Reaktionspaar Polyamid-6/Acrylnitril bzw Vinylacetat ein nahezu vollständiger Umsatz erfolgt, ist für MMA der Umsatz lediglich 25 %.

Im Fall der Polyamidoligomeren mit Azoendgruppen sind ausschließlich AB oder ABA-Blockcopolymere zugänglich. Die Umsetzungen müssen in Lösung ausgeführt werden. Die Initiator-Effektivität ist sehr gering, so daß uneinheitliche Produkte gebildet werden. Aufgrund der notwendigen Reaktionsführung sind Beschränkungen in der Konzentration, der Segment-länge und der Zusammensetzung der Polyamidpräkondensate zu erwarten, da diese Parameter unmittelbar das Löseverhalten der beteiligten Komponenten und die sich einstellende Lösungsviskosität der Reaktionsmischung bestimmen.

Y. Yamashita beschreibt in Polymer Bulletin 5, 361 - 366, zum ersten Mal die Polykondensation eines Polymethacrylat-Makromonomers mit polyamidbildenden Monomeren zur Herstellung von Pfropfcopolymeren. Das PMMA-Makromonomer wurde durch radikalische Polymerisation von MMA in Gegenwart von Thiobemsteinsäure als Kettentransferagens gewonnen. Der Aufbau des Polyamid-Rückgrats erfolgte durch katalysierte Polykondensation mit aromatischen Diaminen und aliphatischen Dicarbonsäuren in Lösung.

Weiterhin beschreibt Y. Chujo et al. in J. Polym. Sci., Part A: Polymer Chemistry 27, 2007-14 (1989) den Einsatz von 2-Mercaptoethanol und 2-Aminoethanthiol als Kettenübertragungsreagenz zur Funktionalisierung von PMMA-Oligomeren. Die erzeugten monofunktionellen PMMA-Oligomere werden durch nachfolgende Reaktion mit Trimellitsäureanhydrid in die entsprechende PMMA-Dicarbonsäure umgewandelt. Damit stehen wiederum Makromonomere für die Polykondensation zur Verfügung. Die erhaltenen Copolymere sind Pfropfcopolymere mit Polyamid-Hauptkette und PMMA-Seitenketten.

Die Vorbildung der PMMA-Makromere vermeidet zwar die bei der radikalischen Polymerisation auftretenden Schwierigkeiten, der Aufbau der beschriebenen Polyamidketten muß jedoch auch in Lösung ausgeführt werden. Der Einsatz der a-bifunktionalisierten Makromere ermöglicht aber nur die Synthese von Pfropfcopolymeren.

In der US-A-4,501,861 werden thermoplastische Polyamidblends, bestehend aus Polyamid-6 und anionisch hergestellten Blockpolymeren auf Basis von Polyamid-6 beschrieben. Die eingesetzten oligomeren Diole, darunter sind auch Poly(alkylacrylate) genannt, müssen an beiden Kettenenden mit einer Acyllactameinheit umgesetzt werden, damit ein Einbau während der anionischen Polymerisation von Caprolactam möglich ist.

Die anionische Ringöffnung ist auf Lactame beschränkt und erfordert eine hohe Reinheit der eingesetzten Komponenten, insbesondere absolute Wasserfreiheit. Auch muß die Umfunktionalisierung der Diole vollumfänglich erfolgen, da ansonsten Abbruchzentren für die anionische Polymerisation geschaffen werden, infolgedessen ein hoher Restlactamgehalt und niedrige Polymerisationsgrade resultieren. Die Reproduzierbarkeit ist deshalb auch ein Hauptproblem dieses Prozesses.

Daher ist es Aufgabe der vorliegenden Erfindung, neue Polyamid-Poly-alkyl(meth)acrylat-Blockcopolymere verfügbar zu machen, die die oben genannten Nachteile des Stands der Technik vermeiden und durch Polykondensation herstellbar sind.

Die Aufgabe wird in Bezug auf das Blockcopolymer durch die Merkmale des Anspruches 1, durch das Verfahren nach Anspruch 7, in Bezug auf die Verwendung durch die Ansprüche 8 bis 10 gelöst.

Die Unteransprüche zeigen vorteilhafte Ausführungen der Erfindung.

Die Erfindung betrifft somit Polyamid-Polyalkyl(meth)acrylat-Blockcopolymere, aufgebaut aus üblichen polyamidbildenden Monomeren sowie mindestens 15 Gew.-% Polyalkyl(meth)acrylaten.

Die erfindungsgemäßen Blockcopolymere werden dadurch hergestellt, daß in einem ersten Polymerisations- oder Polykondensationsschritt bei Temperaturen von 180 bis 300° C, einem Druck von Atmosphärendruck bis 3 x 106 Pas (30 Bar) Polyamid- oder Copolyamidblöcke mit einer zahlenmittleren Molmasse im Bereich von 500 bis 5000 g/Mol, bevorzugt im Bereich von zwischen 750 bis 2500 g/Mol, mit einer Amino-Endgruppenkonzentration von höchstens 50 mMol/kg, gegebenenfalls unter Zusatz von Komponente D im Fall wenn X = N in Formel (III), hergestellt werden und zur Reduktion des Wassergehalts mindestens 0,5 Stunden bei einem Druck von 50 mbar bis Atmosphärendruck entgast wird, in einem zweiten Schritt, α,ω-funktionalisierte Polyalkyl(meth)acrylatdiole mit einer zahlenmittleren Molmasse im Bereich von zwischen 600 und 5000 g/Mol, bevorzugt im Bereich von zwischen 900 und 2500 g/Mol, als Festsubstanz, Lösung oder Schmelze zusammen mit der gesamten bzw. einem Teil der Diolkomponente (III), im Falle wenn X = O in Formel (III), zugegeben werden, bzw. gegebenenfalls Komponente (III), im Falle von X = O und R⁴ = (3) mit dem α,ω-funktionalisierten Polyalkyl(meth)acrylatdiol in einem parallelen Kondensationsschritt zu einem Polyesterdiol umgesetzt wird, und das Reaktionsgemisch bei einer Temperatur von 180 bis 300°C, in Gegenwart von 0,05 bis 0,2 Gew.-% eines Katalysators, in einem weiteren Polykondensationsschritt bei vermindertem Druck zum hochmolekularen Blockcopolymer (A) fertig kondensiert, ausgetragen oder zu Formkörpern weiterverarbeitet wird.

Die Erfindung betrifft ebenfalls thermoplastische Mehrschichtverbunde, bestehend aus mindestens einer Schicht aus einer Formmasse auf Basis von (Co-)Polyamid, mindestens einer Schicht aus einer Formmasse aus einem thermoplastischen Werkstoff, ausgewählt aus der Gruppe, bestehend aus Poly-alkyl(meth)acrylaten Polycarbonaten und Blends aus Polycarbonaten mit anderen Kunststoffen, wie z.B. Polyolefinen, wobei die Poly-alkyl(meth)acrylate Homopolymere oder Copolymere sind, bei denen bis zu 50 Mol-% des Methyl(meth)acrylats durch andere Monomere aus der Gruppe aus Butylmethacrylat, Butylacrylat, Methacrylsäure, Itaconsäure, Styrol, Maleinsäureanhydrid ersetzt sein können, der Fluorpolymere, oder der perflurierten Polymere oder Gemischen der vorgenannten Verbindungen und mindestens einer Zwischenschicht auf Basis einer Haftvermittler-Formmasse aus den thermoplastischen Block-copolymeren gemäß einem oder mehreren der Ansprüche 1 bis 6. Als haftvermittelte Zwischenschicht zwischen den Schichten (a) und (b) kommt alternativ erfindungsgemäß auch ein Blend aus den die Schichten (a) und (b) aufbauenden Polymeren in Betracht, wobei wenigstens ein Teil des Blends aus dem thermoplastischen Blockcopolymeren (gemäß den Ansprüchen 1 bis 6) bestehen kann. In einer besonderen Ausführungsform der Erfindung enthält die physikalische Mischung (Blend) mindestens 8 Gew.-% der erfindungsgemäßen thermoplastischen Block-copolymere. In einer anderen Ausführungsform kann die Zwischenschicht auf Basis einer Haftvermittlerformmasse zu 100 Gew.-% aus den thermoplastischen Blockcopolymeren gemäß einem der Ansprüche 1 bis 6 bestehen.

Die erfindungsgemäßen Mehrschichtverbunde finden bei Konstruktionsteilen vor allem im Bereich der Automobil-, Elektro-, Maschinenbau- Industrie Verwendung. Insbesondere finden sie Verwendung zur Herstellung von Fasern, Folien, Formkörpern wie z.B. Gehäusen, Gehäuseteilen von Mobilfunktelefonen und als Schmelzkleber. Besonders bevorzugt ist die Verwendung als Mehrschichtrohr im KFZ-Bereich.

Die Erfindung betrifft daher auch Mehrschicht-, Polymerschlauch- oder Rohrleitungen, die gegebenenfalls auch im mindestens einen Teilbereich gewellt sein können, bestehend aus einer Innenschicht aus Fluorpolymeren, einer Außenschicht aus Polyamid, wobei als Polyamid besonders Polyamid-12 oder Polyamid-12-Abkömmlinge bevorzugt sind, und einer dazwischenliegenden Haftvennittlerschicht auf Basis der thermoplastischen Blockcopolymere gemäß einem der Ansprüche 1 bis 6. Als Haftvermittlerschicht kann aber ebenfalls eine physikalische Mischung aus den die Innen- und Außenschicht bildenden Polymere vorhanden sein, wobei zumindest ein Teil durch die thermoplastischen Blockcopolymere gemäß einem der Ansprüche 1 bis 6 ersetzt sein kann. Vorteilhafterweise enthält diese physikalische Mischung mindestens 8 Gew.-% des erfindungsgemäßen thermoplastischen Blockcopolymeren. Die Zwischenschicht kann aber auch zu 100 Gew.-% aus den thermoplastischen Copolymeren bestehen.

Die für die Innenschicht der erfindungsgemäßen Mehrschichtpolymerschlauch- oder -rohrleitungen eingesetzten Fluropolymere sind ausgewählt aus Fluorpolymeren auf Basis von Tetrafluorethylen (TFE), Hexafluorpropylen (HFP) und Vinylidenfluorid (VDF) und Fluorpolymeren auf Basis von Tetrafluorethylen (TFE), Perfluormethylvinylether (PMVE) und Vinylidenfluorid (VDF). Besonders bevorzugt ist erfindungsgemäß ein Terpolymer aus Tetrafluorethylen, Hexafluorpropylen, Vinylidenfluorid (Handelsname THV 500 G, der Firma 3M). Ganz besonders bevorzugt ist aber auch eine Innenschicht aus PVDF.

### Polyamid-Teil

Als Polyamid-bildende Monomere können prinzipiell alle üblichen Lactame, Aminocarbonsäuren, Dicarbonsäuren und Diaminpaare eingesetzt werden. Erfindungsgemäß kommen daher für die Polyamid-Segmente Monomer-Bausteine in Betracht, die ausgewählt sind aus der Gruppe der Lactame mit 6-12 C-Atomen, wie zum Beispiel Laurinlactam oder die entsprechenden a, ω-Aminocarbonsäuren mit 6-12 C-Atomen, wie z.B. ω-Aminolaurinsäure oder die Kombination von aliphatischen Diaminen mit 2-12 C-Atomen und Dicarbonsäuren mit 2-44 C-Atomen und aliphatischen und cycloaliphatischen Diaminen mit 2-18 C-Atomen wie zum Beispiel Dodecandiamin/Dodecandisäure oder Dodecandiamin/Sebacinsäure oder Dodecandiamin/C36-Dimersäure und andererseits weitere Monomere, wie sie für teilaromatische Polyamide eingesetzt werden. Die Polyamid-Komponente der erfindungsgemäßen Blockco-polymere basiert jedoch bevorzugt auf:
1) aliphatischen Homopolyamiden wie PA 46, PA 6, PA 66, PA 69, PA 610, PA 612, PA 636, PA 810, PA 1010, PA 1012, PA 11, PA 12, PA 1212, oder teilaromatischen Polyamiden wie PA 6I, PA 6T, PA 6I6T, PA 9T, PA 12T sowie Copolyamiden und Multipolyamiden, basierend auf den Dicarbonsäuren C₂-C₃₆ und Diaminen C₂-C₂₄ sowie Lactam-6, Lactam-12, Isophthalsäure, Terephthalsäure und Naphthalindicarbonsäure. Die Polyamid-Komponente kann ebenso erhalten werden durch Polykondensation der entsprechenden Salze von Diamin und Dicarbonsäure.
2) amorphen Polyamiden oder Copolyamiden, die aus verzweigten oder unverzweigten aliphatischen Diaminen mit 6-18 C-Atomen, wie z.B. 1,6-Hexamethylendiamin, 2,2,4- oder 2,4,4-Trimethylhexamethylendiamin, cycloaliphatischen Diaminen, wie z.B. 4,4'-Diaminodicyclo-hexylmethan, 3,3'-Dimethyl-4,4'-diaminodicyclohexylmethan, Isophoron-diamin oder aroma-tischen Diaminen mit 6-12 C-Atomen, wie z.B. m- und p-Xylylendiamin und aliphatischen, cycloaliphatischen oder aromatischen Dicarbonsäuren mit 6-12 C-Atomen aufgebaut sind.
3) Als weitere polyamidbildende Polymere kommen aber auch transparente Copolyamide mit einer Glastemperatur von 30-130° C in Bedracht, die aufgebaut sind aus 90-45 Gew.-Teilen Laurinlactam, das ersetzt sein kann durch ω-Aminocarbonsäuren mit 9-12 C-Atomen oder durch aliphatische Diamine mit 9-12 C-Atomen in Kombination mit aliphatischen Dicarbonsäuren mit 9-12 C-Atomen, und 55-10 Gew.-Teilen von weiteren Monomeren für teilaromatische Polyamide, bestehend aus einem aliphatischen Diamin mit 2-12 C-Atomen in nahezu äquimolarem Verhältnis zum Diamin und mindestens einer aromatischen Dicarbon-säure, die durch maximal 15 Mol-% einer anderen aliphatischen Dicarbonsäure mit 9-36 C-Atomen ersetzt sein kann. Derartige transparente Copolyamide sind in EP 603 813 B1 beschrieben.

Die erfindungsgemäßen Polyamidsegmente weisen zahlenmittlere Molmassen im Bereich von 500 bis 5000 g/mol, bevorzugt im Bereich zwischen 750-2500 g/mol auf.

### PMMA-Teil

Das Polyalkyl(meth)acrylat-Segment für die durch Polykondensation zugänglichen erfindungsgemäßen Blockcopolymere wird in Form eines α,ω-funktionalisierten Polyalkyl(meth)acrylats eingeführt, welches kondensationsfähige Endgruppen trägt. Als solche bieten sich die nach der sogenannten "Iniferter-Technik" hergestellte (C.P. Reghunadhan Nair et al. in J. Polymer Sci., Part A: Polymer Chemistry 27, 1795 (1989)) oder die nach DE-A-43 14 111 oder US-A-5,900,464 zugänglichen a, ω-Poly(meth)acrylatediole bzw. die in EP-A-0 708 115 beschriebenen a, ω-Poly(meth)acrylatdicarbonsäuren an.

Die eingesetzen a, ω-funktionalisierten Polyalkyl(meth)acrylate weisen zahlenmittlere Molmassen im Bereich zwischen 600 und 5000 g/mol, bevorzugt im Bereich zwischen 900 und 2500 g/mol auf. Die Bifunktionalität beträgt mindestens 90 %. Die Glasübergangstemperatur liegt zwischen - 50 und +170° C.

### Komponente D

Als weiterer Baustein der Blockcopolymere wird ein Diol oder Diamin der Formel (III)

HX-D-XH (III),

mit X = NH oder O
eingesetzt, wobei D ausgewählt ist aus der Gruppe aus (1), (2), (3), (4), (5):
(1) ein zweiwertiger aliphatischer, gegebenenfalls cycloaliphatischer Kohlenwasser-stoffrest mit 4-36 C-Atomen, gegebenenfalls ungesättigt,
(2) ein aliphatisches Olefinpolymerisat mit einer Molmasse von 500-4000 g/mol, gegebenenfalls ungesättigt,
(3) ein zweiwertiger Polyetherrest der allgemeinen Formel -(CₙH₂ₙO)ₘ-CₚH₂ₚ-, wobei n = 2-4, p = 2-4 und die Molmasse 400-2500 g/mol ist,
(4) ein Polyesterrest der allgemeinen Formel (IVa) oder (IVb): 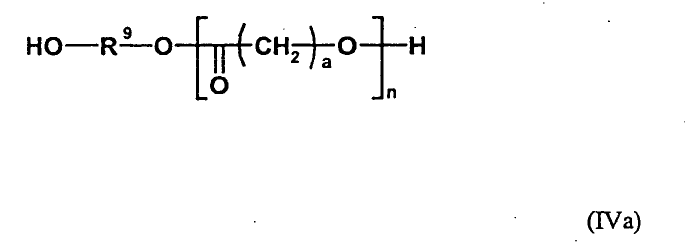 worin n = eine ganze Zahl von 3 bis 20
   bzw. 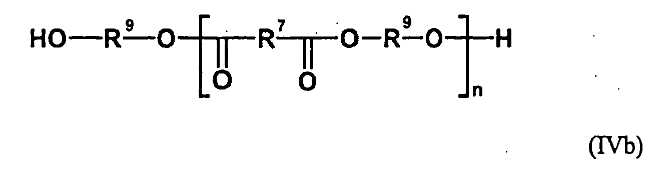 worin a = eine ganze Zahl von 5 bis 11 und n = eine ganze Zahl von 5 bis 30,
   wobei R⁹ ein aliphatischer oder cycloaliphatischer Kohlenwasserstoffrest mit 2-36 Kohlenstoffatomen und
   R⁷ ein zweiwertiger aliphatischer, gegebenenfalls ungesättigter Kohlenwasser-stoffrest mit 2-20 Kohlenstoffatomen, ein cycloaliphatischer Kohlenwasserstoff mit bis zu 36 C-Atomen oder ein aliphatisch-aromatischer Kohlenwasserstoffrestmit 8-20 C-Atomen ist;
(5) ein organischer Polysiloxanrest mit einer Molmasse von 500-3000 g/mol.

Als Beispiel seien genannt: Butandiol, Hexandiol, Cyclohexandimethanol, Dodecandiol, Dimerdiol, Hexamethylendiamin, Dodecandiamin, 2,2,4- und 2,4,4-Trimethylhexa-methylen-diamin, 3,3'-Dimethyl-4,4'-dianxinodicyclohexylmethan, 4,4'-Diaminodicyclo-hexyl-methan, Polyethylenglykoldiol, Polypropylenglykoldiol, Polytetramethylendiole, Poly-ethylen-glykol-diamine, Polypropylenglykoldiamine, Polytetramethylendiamine, Polybutadiendiole und Poly-(butadien-co-ethylen)-diole, gegebenenfalls hydriert, Polycaprolactondiole, Polyester-diole auf der Basis von aliphatischen oder aromatischen Dicarbonsäuren und aliphatischen bzw. cyclo-aliphatischen C2-C36 Diolen oder aromatischen C6-C18 Diolen.

Als weitere Beispiele für die Substanzgruppe (III) HX-D-XH seien genannt:

| Beispiele für Komponente III (Komponente D) | Mittlere Molmasse [g/mol] | Funktionalität (XH) | Hersteller |
|---|---|---|---|
| Kraton Liquid Polymer L-2203 | 3400 | OH | Shell |
| Pripol 2033 | 540 | OH | Uniqema |
| Hycar ATBN 1300x21 | 2400 | NH | BF Goodrich |
| Tegomer H-Si 2311 | 2500 | OH | Th. Goldschmidt AG |
| Desmophen 2000 MZ | 2000 | OH | Bayer |
| Tone Polyol 0230 | 1250 | OH | Union Carbide |
| Priplast 3197 | 2000 | OH | Uniquema |

Die ersten 3 Produkte weisen eine reine C-Kette auf, während die letzten 3 Beispiele Copolyesterdiole sind. Tegomer H-Si 2311 ist ein Polysiloxandiol.

Die Erfindung betrifft weiterhin die Verwendung der Blockcopolymere zur Herstellung von Fasern, Folien und Formkörpern z.B. von Mono- oder Mehrschichtrohren sowie als Schmelzkleber für textile und technische Anwendungen.

Weiterhin ist es auch möglich, die erfindungsgemäßen Blockcopolymere als Kleber zur Verbindung von Gehäuseteilen wie z.B. Gehäusen für Mobilfunktelefone einzusetzen. Bislang ist es üblich Displays von Mobilfunktelefonen aus PMMA herzustellen, während die Gehäuse aus Polycarbonat (Polycarbonatharze werden aufgrund ihrer hervorragenden Wärmebeständigkeit, ihrer hervorragenden Schlagfestigkeit und ihrer guten Formbeständigkeit eingesetzt) oder ABS bestehen. Beide Teile werden dann mit Hilfe von Klebern wie z.B. Polyurethanen miteinander verklebt. Aufgrund von erhöhten Anforderungen besteht aber die Notwendigkeit, Gehäuse aus Polyamid-Wertstoffen wie z.B. Grilamid TR90 herzustellen. Bislang bestand jedoch keine Möglichkeit ein derartiges Gehäuseteil aus Grilamid TR90 oder Polycarbonat mit einem Display aus PMMA zu verkleben. Mit Hilfe der neuen erfindungsgemäßen Block-copolymere ist dies jedoch erstmals möglich. Es kann PMMA-Display mit einem Gehäuse aus Grilamid TR90 spritzwasserdicht verklebt werden.

Gegenstand der Erfindung sind u.a. thermoplastische Mehrschichtverbunde aus Polyamiden und Polyalkyl(meth)acrylaten und Polycarbonaten bzw. Fluorpolymeren sowie Copolymere und Blends auf Basis der genannten Stoffgruppen.

Der erfindungsgemäße thermoplastische Mehrschichtverbund besteht aus
A: mindestens einer Schicht aus (Co)Polyamid und
B: mindestens aus einer Schicht eines thermoplastischen Werkstoffes, ausgewählt aus der Gruppe der Polyalkyl(meth)acrylate, der Polycarbonate, der Fluorpolymere oder der perfluorierten Polymeren,
C: mindestens einem zu den Schichten A und B benachbarten Haftvermittler, wobei die Schichten miteinander kraftschlüssig verbunden sind und als Haftvermittler das Blockcopolymere gemäß einem der Ansprüche 1 bis 6 eingesetzt wird.

Bevorzugte erfindungsgemäße Ausführungsformen:
1.
   Mehrschichtverbund, durch Spritzguß oder Extrusion hergestellt, bei dem die Schichten A und B Polyamid-12 und PMMA sind.
2.
   Mehrschichtverbund, durch Spritzguß, Extrusion, Kalandrieren oder Verschweißen her-gestellt, bei dem die Schichten (a) und (b) ein transparentes Polyamid und PMMA bzw PMMA-Copolymer bzw. Polycarbonat sind. Die verwendeten transparenten Polyamide weisen eine Licht-durchlässigkeit im Wellen-längenbereich des sichtbaren Lichtes von mindestens 80 % auf. Bevorzugt werden insbesondere amorphe Polyamide aus Terephthalsäure und dem Isomerengemisch aus 2,2,4- und 2,4,4-Trimethylhexamethylendiamin, das Copolyamid aus Isophthalsäure, 3,3'-Dimethyl-4,4'-diaminodicyclohexylmethan und Laurinlactam sowie das Polyamid aus 1,12-Dodecandicarbonsäure und 4,4'-Diaminodicyclohexylmethan bzw. 3,3'-Dimethyl-4,4'-diaminodicyclohexylmethan.
   Die zwischen den Schichten A und B liegende Schicht C kann über die haftvermittlende Wirkung hinausgehende weitere Funktionen aufweisen. Durch Einbringen von beispielsweise UVabsorbierenden, photochromen, polarisierenden oder thermotropen Substanzen in die Schicht C läßt sich der Mehrschichtverbund als Funktionseinheit in optischen Anwendungen einsetzen. Denkbar wäre auch der Einsatz einer solchermaßen funktionalisierten Schicht als eine nach außen bzw. innen abschließenden Schicht. Je nach Anforderung kann dem Blockcopolymer durch Einstellung des Segmentdichteverhältnisses eher die typischen Eigenschaften des zugrundeliegenden Polyamides - oder des α,ω-funktionalisierten Polyalkyl(meth)acrylats - verliehen werden.
   Die Kratzfestigkeit eines Konstruktionsteiles aus transparentem Polyamid (PA) kann durch Aufbringen einer PMMA-Außenschicht verbessert werden. Umgekehrt verleiht eine Außenschicht aus transparentem Polyamid dem Mehrschichtverbund eine gute Spannungsriß- und Chemikalienbeständigkeit. In beiden Fällen muß wegen der Unverträglichkeit der Polyamid- und Polyalkyl(meth)acrylat-Schichten eine kraftübertragende, haftvermittlende Schicht eingesetzt werden. Durch Einsatz von Polymethacrylimid (PMI) anstelle von PMMA lassen sich Anwendungen realisieren, die eine deutlich höhere Dauergebrauchstemperatur zulassen. Durch teilweise oder vollständige Imidisierung der (Meth)acrylat-Komponente im Block-copolymer wird auch dessen Temperaturbeständigkeit angehoben und die Verträglichkeit zu PMI deutlich verbessert.
   Die Schicht B in den Ausführungsformen 1) und 2) ist insbesondere aus Polyalkyl-(meth)acrylaten mit 1-12 C-Atomen in der Kohlenstoffkette des Alkylrestes, der gegebenenfalls teilweise oder vollständig fluoriert ist, aufgebaut. Die Polyalkyl(meth)acrylate weisen üblicherweise einen Melt-Flow-Index von 0,5 bis 30 g/10 min auf, gemessen bei 230° C mit einer Belastung von 3,8 kg. Besonders bevorzugt werden Polymethylmethacrylat und Polybutylmethacrylat. Es können aber auch Copolymere der Polyalkyl(meth)acrylate zum Einsatz kommen. Es können bis zu 50 Mol-% des Methylmethacrylates durch andere Monomere wie Butylmethacrylat, Butylacrylat, Methacrylsäure, Itaconsäure, Styrol, Maleinsäureanhydrid ersetzt sein. Polymere, die für Schicht B eingesetzt werden, können darüber hinaus Stabilisatoren, Verarbeitungshilfsmittel, Schlagzähmodifikatoren, Füllstoffe sowie andere übliche Additive bzw. Zuschlagsstoffe in den üblichen Mengen enthalten.
3.
   Mehrschichtverbund, durch Spritzguß oder Extrusion hergestellt, bei dem die Schichten A und B Polyamid-12 und PVDF sind. Aufgrund der guten Sperreigenschaften des PVDF gegenüber verschiedenen Kraftstoffen kann ein Dreischichtrohr mit einer Innenschicht aus PVDF, einer mittleren Schicht aus dem erfindungsgemäßen Blockcopolymer und einer äußeren Schutzschicht auf Basis Polyamid-12 als kraftstoffführende Leitung in Automobilen eingesetzt werden. Die Innenschicht der erfindungsgemäßen Polymer- oder Schlauchleitung ist gegenüber dem zu transportierenden Medium inert; die Außenschicht ist gegenüber Druck und mechanischen Einflüßen beständig. Die Schichtdicke der erfindungsgemäßen Schlauch- Rohrleitung ist unkritisch. Bevorzugt sind Außenschichten im Bereich von 0,2-0,8 mm, Haftschichten im Bereich von 0,05 bis 0,3 mm und Innenschichten im Bereich von 0,01-0,7 mm. Wie bereits oben ausgeführt wurde, ist es auch möglich, daß die Wandung der Schlauch- oder Rohrleitung mit einer ring- oder spiralförmigen Wölbung versehen ist, die Innenschichten antistatisch mit z.B. Leitruß oder Carbonfibrillen auszurüsten und die Außenschichten mit Weichmachern oder anderen Modifikatoren nach dem Stand der Technik zu modifizieren. Durch Zugabe von Glasfasern kann eine Längenstabilität erreicht werden.
   Die erfindungsgemäßen Mehrschicht- Polymerleitungen können in einem Leitungsteil gewellt sein, und die durch die Wellen gebildete Ringe verlaufen um die Rohrleitungsachse, wobei die Wellen zumindest teilweise in ovaler Form oder in Form einer Ellipse bzw. in Form eines an einer Seite abgeflachten Kreises gebildet sein können. Derartige Geometrien, d.h. Ausbildung der Wellen von Rohrleitungen sind zum Beispiel in DE-A-44 32 584 beschrieben.
   Die erfindungsgemäße Polymerleitung kann durch Coextrusion eines Polymerrohres und gegebenenfalls anschließender Ausbildung der Wellen samt gegebenenfalls vorhandener Abflachung durch Saug- oder Blasformen hergestellt werden. Die erfindungsgemäße Polymer-leitung kann aber auch durch Extrusionsblasformen, Coextrusionsblasformen, sequentielle Blasformen mit und ohne Schlauchmanipulationen hergestellt werden.
4.
   Mehrschichtverbund, durch Extrusion hergestellt, bei dem ein kraftschlüssiger Verbund zwischen dem Cladding einer polymeroptischen Faser und der angrenzenden Schutzhülle hergestellt wird. Die aus mindestens einer Schicht bestehende Schutzummantelung des Kunststoff-Lichtwellenleiters (KLWL) basiert auf Polyamid-12 oder Polyamidelastomeren oder Polyamid-12-Copolymeren oder Blends auf der Basis von Polyamid-12 oder thermo-plastischen Polyurethanen, die auch flammwidrig ausgerüstet sein können.

Zur Erreichung einer guten Gesamtleistung des ummantelten Kunststoff-Lichtwellenleiters (KLWL) darf der Kern und das Cladding des KLWL während des Beschichtungsvorganges nicht erweichen. Jede unkontrollierte Verformung oder Verletzung des KLWL oder des Claddings erhöht unweigerlich die Dämpfung, so daß die Signalreichweite ungenügend wird. Migrierende Bestandteile aus den zum KLWL angrenzenden Schichten, die den Brechungsindex des Claddings verändern, müssen unbedingt vermieden werden, weil hierdurch die Totalreflexion und damit die Signalübertragung negativ beeinflußt wird. Das Blockcopolymer nach Anspruch 1 enthält nur eine sehr geringe Konzentration an Restmonomer und keinerlei Weichmacher. Das haftvermittlende Blockcopolymer nach Anspruch 1 läßt sich so einstellen, daß trotz der relativ niedrigen Verarbeitungstemperatur, ein gutes Fließverhalten resultiert, das zu einer glatten, dünnen und gleichmäßigen, auf der KLWL gut haftenden Schicht führt. Dank seiner einzigartigen Charakteristik, wird mit dem erfindungsgemäßen Haftvermittler auf nahezu allen handelsüblichen KLWLs, die hinsichtlich ihrer chemischen Zusammensetzung unterschiedlichste Claddings besitzten (PVDF, Fluor-Copolymere, teilfluorierte Polyalkyl(meth)acrylate oder Alkyl(meth)-acrylat-Copolymere, epoxydierte Polymere), gute bis sehr gute Haftwerte erzielt. Aufgrund der variablen Zusammensetzung in der Polyamidkomponente wird auch eine sehr gute Haftung u.a. zu verschiedenen Polyamiden, PA-Elastomeren und -Copolymeren, PA-Olefin-Blends oder Polyurethan als Außen- oder Mittelschicht erreicht.

Optische Adern der zuvor beschriebenen Art sowie die verwendeten Materialien werden in der WO 00/60382 beschrieben, auf die hier in diesem Zusammenhang bezug genommen wird.

Die erfindungsgemäß verwendeten Polyamide können zudem Stabilisatoren, Verarbeitungshilfsmittel, übliche Schlagzähmacher, Weichmacher sowie andere gebräuchliche Additive und Zuschlagsstoffe in den üblichen Mengen enthalten.

Als Haftvermittler werden die Blockcopolymere gemäß Anspruch 1 bzw. daraus hergestellte Formmassen eingesetzt, die bei der Herstellung der Mehrschichtverbunde (Extrusion, Spritzguß, Siegeln) einen kraftschlüssigen Verbund mit den benachbarten Schichten ergeben. Bei geeigneter Auswahl der Polyamidkomponente wird die Transparenz des Mehrschichtverbundes nicht oder nur unwesentlich vermindert.

Die Herstellung der thermoplastischen Mehrschichtverbunde kann einstufig oder mehrstufig erfolgen.

Die Erfindung wird nachfolgend durch mehrere Beispiele näher erläutert, ohne sie darauf einzuschränken.

### Beispiel 1

308,45 g Aminododecansäure, 62,0 g eines Polypropylenglykoldiamins mit einer zahlenmittleren Molmasse von 380 g/mol. und 82,25 g Adipinsäure werden bei Temperaturen bis 260° C zu einem Präpolymeren mit Säureendgruppen kondensiert. Dann wird die Temperatur auf 220° C gesenkt und 409,09 g PMMA-Diol mit Mₙ = 900 g/mol und 1,00 g Monobutylzinnsäure zugegeben. Unmittelbar danach wird der Reaktor verschlossen und der Druck vermindert (< 10 mbar). Nach 3,5 h wird die Veresterung durch Brechen des Vakuums beendet und das Blockpolymer ausgetragen.

### Beispiel 2

375,55 g Aminododecansäure, 44,50 g eines Polytetrahydrofurandiamins (Mₙ = 950 g/mol) und 57,43 g Adipinsäure werden bei Temperaturen bis 260° C zu einem Polyetheramid-Präpolymeren kondensiert. Dann wird die Temperatur auf 220° C gesenkt und 355,26 g PMMA-Diol mit Mₙ = 900 g/mol und 1,00 g Monobutylzinnsäure zugegeben. Unmittelbar danach wird der Reaktor verschlossen und der Druck vermindert (< 10 mbar). Nach 3,5 h wird die Veresterung durch Brechen des Vakuums beendet und das Blockpolymer ausgetragen.

### Beispiel 3

4,00 kg Laurinlactam werden unter Zusatz von 1,14 kg Terephthalsäure und 2,05 kg Wasser bei Temperaturen bis 300° C und einem Druck von 20 bar in ein Polyamid-12-Vorkondensat mit einer zahlenmittleren Molmasse von 750 g/mol überführt. Nachdem die Temperatur der Vorkondensatschmelze auf 230° C gesenkt wurde, werden 3,09 kg eines PMMA-Diols mit einer zahlenmittleren Molmasse von 900 g/mol, 1,88 kg Dimerdiol und 14 g Monobutylzinnsäure zugegeben. Unmittelbar danach wird der Reaktor verschlossen und der Druck auf unter 10 mbar reduziert. Nach Erreichen des vorgegebenen Drehmomentes von 30 Nm wird die Veresterung durch Brechen des Vakuums beendet und das Blockpolymer ausgetragen.

### Beispiel 4

5,00 kg Laurinlactam werden unter Zusatz von 1,00 kg Terephthalsäure und 2,40 kg Wasser polymerisiert (Druckphase: 280-300° C, 17-23 bar, 3 h; Entspannen und Entgasen bei 260 C). Dann wird die Temperatur auf 230° C gesenkt und 2,70 kg PMMA-Diol mit Mₙ = 900 g/mol, 1,65 kg Dimerdiol und 17 g Tetra-n-propylzirkonat als 65 %ige Lösung in n-Propanol zugegeben. Unmittelbar danach wird der Reaktor verschlossen und der Druck vermindert (< 10 bar). Nach Erreichen des gewünschten Drehmoments wird die Veresterung durch Brechen des Vakuums beendet, das Blockpolymer ausgetragen und granuliert.

### Beispiel 5

6,00 kg Laurinlactam werden unter Zusatz von 0,75 kg Terephthalsäure und 2,70 kg Wasser polymerisiert (Druckphase: 280-300° C und 17-23 bar, Entspannen und Entgasen bei 260° C). Dann wird die Temperatur auf 240° C gesenkt und 2,03 kg PMMA-Diol mit Mₙ = 900 g/mol, 1,24 kg Dimerdiol und 12 g Metatin S26 (Monobutylzinnsäure) zugegeben. Unmittelbar danach wird der Reaktor verschlossen und der Druck vermindert (< 10 mbar). Nach Erreichen des gewünschten Drehmoments wird die Veresterung durch Brechen des Vakuums beendet und das Blockpolymer ausgetragen.

### Beispiel 6

3,78 kg Laurinlactam werden unter Zusatz von 1,07 kg Terephthalsäure und 1,90 kg Wasser polymerisiert (Druckphase: 270-310° C und 17-23 bar, Entspannen und Entgasen bei 260 C). Dann wird die Temperatur auf 230° C gesenkt und 4,66 kg PMMA-Diol mit Mₙ = 900 g/mol, 0,89 kg Dimerdiol und 17 g Tetra-n-butylzirkonat gelöst in n-Butantol zugegeben. Unmittelbar danach wird der Reaktor verschlossen und der Druck vermindert (< 10 mbar). Nach Erreichen des gewünschten Drehmoments wird die Veresterung durch Brechen des Vakuums beendet, das Blockpolymer ausgetragen und granuliert.

### Beispiel 7

4,00 kg Laurinlactam werden unter Zusatz von 1,14 kg Terephthalsäure und 2,05 kg Wasser polymerisiert (Druckphase: 270-300° C und 17-20 bar, Entspannen und Entgasen bei 260 C). Dann wird die Temperatur auf 225° C gesenkt und 4,94 kg PMMA-Diol mit Mₙ = 900 g/mol, 0,94 kg Dimerdiol und 18 g Tetra-n-propylzirkonat gelöst in n-Propanol zugegeben. Unmittelbar danach wird der Reaktor verschlossen und der Druck vermindert (< 10 mbar). Nach erreichen des gewünschten Drehmoments wird die Veresterung durch Brechen des Vakuums beendet, das Blockpolymer ausgetragen und granuliert.

### Beispiel 8

3,60 kg Laurinlactam werden unter Zusatz von 1,02 kg Terephthalsäure polymerisiert (Druckphase: 300° C und 20 bar, Entspannen und Entgasen bei 260 °C). Dann wird die Temperatur auf 230° C gesenkt und 3,89 kg PMMA-Diol mit Mₙ = 900 g/mol, 1,85 kg Polybutylmethacrylatdiol mit Mₙ = 1000 g/mol, 0,17 kg Dimerdiol und 12 g Zinndioctoat zugegeben. Unmittelbar danach wird der Reaktor verschlossen und der Druck vermindert (< 10 mbar). Nach erreichen des gewünschten Drehmoments wird die Veresterung durch Brechen des Vakuums beendet und das Blockpolymer ausgetragen.

### Beispiel 9

4,00 kg Laurinlactam werden unter Zusatz von 1,14 kg Terephthalsäure und 2,05 kg Wasser polymerisiert (Druckphase: 300° C und 20 bar, Entspannen und Entgasen bei 260 C). Dann wird die Temperatur auf 230° C gesenkt und 3,39 kg PMMA-Diol mit Mₙ = 900 g/mol, 1,88 kg Dimerdiol und 17 g n-Butylpolytitanat zugegeben. Unmittelbar danach wird der Reaktor verschlossen und der Druck vermindert (< 10 mbar). Nach erreichen des gewünschten Drehmoments wird die Veresterung durch Brechen des Vakuums beendet, das Blockpolymer ausgetragen und granuliert.

### Beispiel 10

389,49 g Aminododecansäure und 52,46 g Adipinsäure werden bei Temperaturen bis 260° C zu einem PA-12-Vorkondensat kondensiert. Dann wird die Temperatur auf 220° C gesenkt und 296,76 g PMMA-Diol mit Mₙ = 900 g/mol, 83,45 g eines Polytetrahydrofurandiols mit Mₙ = 1000 g/mol und 1,36 g Tetra-n-propylzirkonat gelöst in n-Propanol zugegeben. Unmittelbar danach wird der Reaktor verschlossen und der Druck vermindert (< 10 mbar). Nach 3,5 h wird die Veresterung durch Brechen des Vakuums beendet und das Blockpolymer ausgetragen.

### Beispiel 11

Amorphes Polyamid-Oligomer mit einer zahlenmittleren Molmasse von 2000 g/mol und einer Aminoendgruppenkonzentration = 50 mmol/kg: 1,27 kg 3,3'-Dimethyl-4,4'-diaminodi-cyclohexylmethan, 1,23 kg Dodecandisäure und 0,21 kg Isophthalsäure werden bei Temperaturen von 270° C zu einem amorphen PA-Vorkondensat kondensiert. Nach Beenden der Kondensation wird das Kondensat ausgetragen und mittels Brecher zerkleinert. Das amorphe PA-Vorkondensat besitzt eine Lösungsviskosität von 1,15 (0,5 % in m-Kresol) und eine Glasübergangstemperatur von 120° C.

### Beispiel 12

460,00 g amorphes PA-Vorkondensat aus Beispiel 11 werden mit 195,90 g PMMA-Diol mit Mₙ = 900 g/mol, 33,30 g Polytetramethylenglykol mit der zahlenmittleren Molmasse 980 g/mol und 1,20 g eines Tetra-n-propylzirkonat gelöst in n-Propanol unter vermindertem Druck (< 10 mbar) polymerisiert. Nach Erreichen des gewünschten Drehmoments wird die Veresterung durch Brechen des Vakuums beendet und das Blockpolymer ausgetragen.

### Beispiel 13

2,63 kg 3,3'-Dimethyl-4,4'-diaminodicyclohexylmethan, 2,54 kg Dodecandisäure und 0,95 kg Isophthalsäure werden bei Temperaturen von 250-280° C zu einem amorphen PA-Vorkondensat umgesetzt. Dann wird die Temperatur auf 230° C gesenkt und das Vorkondensat zu einer auf 200° C vorgewärmten Schmelzemischung aus 2,58 kg PMMA-Diol mit Mₙ = 900 g/mol, 1,57 kg Dimerdiol und 24 g eines Veresterungskatalysator gegeben. Unmittelbar nach Vereinigung der Komponenten wird der Reaktor verschlossen und der Druck auf 5-20 mbar reduziert. Nach 2 Stunden im.Vakuum wird das gewünschte Drehmoment von 30 Nm erreicht und die Veresterung durch Brechen des Vakuums beendet sowie das Blockpolymer ausgetragen und granuliert.

### Beispiel 14

2,54 kg 3,3'-Dimethyl-4,4'-diaminodicyclohexylmethan, 2,46 kg Dodecandisäure und 0,42 kg Isophthalsäure werden bei Temperaturen zwischen 230 und 280°. C und Normaldruck zu einem amorphen Polyamid (PA)-Vorkondensat mit einer zahlenmittleren Molmasse von 1000 g/mol umgesetzt. Bevor das Vorkondensat mit einer Schmelze aus 1,70 kg PMMA-Diol mit Mₙ = 900 g/mol, 0,35 kg Dimerdiol und 24 g eines Veresterungskatalysator vereinigt wird, muß die Temperatur der Vorkondensatschmelze auf 230° C gesenkt werden. Unmittelbar danach wird der Reaktor verschlossen und der Polymeraufbau durch Reduktion des Druckes eingeleitet. Nach ca. 2 h bei einem Druck von 5-10 mbar wird ein Drehmoment von 25 Nm erreicht und die Veresterung durch Brechen des Vakuums beendet. Anschließend wird das Blockpolymer ausgetragen und granuliert.

### Beispiel 15

Ein amorphes Polyamid-Oligomer wird durch Umsetzung von 3,05 kg 3,3'-Dimethyl-4,4'-diaminodicyclohexylmethan und 3,67 kg Dodecandisäure bei Temperaturen von 230-270° C unter Normaldruck hergestellt. Nachdem die Vorkondensatschmelze auf 230° C abgekühlt wurde, wird eine auf 230° C temperierte Mischung aus 2,06 kg PMMA-Diol mit Mₙ = 900 g/mol, 0,43 kg Dimerdiol und 20 g Tetra-n-butylzirkonat gelöst in n-Butanol zudosiert. Unmittelbar danach wird der Reaktor verschlossen und der Druck vermindert (< 10 mbar). Nach Erreichen des gewünschten Drehmoments wird die Veresterung durch Brechen des Vakuums beendet, das Blockpolymer ausgetragen und granuliert.

**Tabelle 1 Zusammensetzung und Analysenergebnisse der Polyamid-Polymethylmethacrylat-Copolymere: Beispiele 1 bis 10 und 12 bis 15**

| Bsp. | PA-Komponente | | HX-D-XH | | η_{rel.}³⁾ | T_{E}⁶ [°C] | Zug-E-Modul [MPa] | RF¹⁾ [MPa] | RD²⁾ [%] |
|---|---|---|---|---|---|---|---|---|---|
| | Typ | Konz.⁴ | Typ | Konz.⁵ | | | | | |
| 1 | Mod. PA-12 | 50,2 | PPG-Diamin⁷ | 8,4 | 1,70 | 140 | 950 | 22 | 200 |
| 2 | Mod. PA-12 | 54,9 | PTHF-Diamin⁸ | 5,8 | 1,71 | 150 | 1220 | 24 | 170 |
| 3 | PA-12 | 50,7 | C36-Diol | 18,6 | 1,77 | 130 | 230 | 25 | 150 |
| 4 | PA-12 | 57,9 | C36-Diol | 15,9 | 1,56 | 140 | 300 | 22 | 120 |
| 5 | PA-12 | 67,2 | C36-Diol | 12,4 | 1,50 | 150 | 530 | 26 | 210 |
| 6 | PA-12 | 46,5 | C36-Diol | 8,5 | 1,50 | 130 | 600 | 28 | 160 |
| 7 | PA-12 | 46,6 | C36-Diol | 8,5 | 1,44 | 130 | 520 | 23. | 220 |
| 8 | PA-12 | 43,8 | BD1000⁹ | 17,5 | 1,50 | 130 | 520 | 22 | 190 |
| 9 | PA-12 | 49,2 | C36-Diol | 18,0 | 1,46 | 130 | 240 | 25 | 265 |
| 10 | PA-12 | 51,8 | Poly-THF¹⁰ | 10,6 | 1,53 | 150 | 700 | 24 | 125 |
| 12 | amorphes PA | 66,9 | Poly-THF | 4,8 | 1,50 | 120 | 1960 | 49 | 10 |
| 13 | amorphes PA | 57,8 | C36-Diol | 15,8 | 1,56 | 90 | 1470 | 29 | 7 |
| 14 | amorphes PA | 70,9 | C36-Diol | 4,9 | 1,48 | 120 | 1890 | 33 | 5 |
| 15 | amorphes PA | 71,4 | C36-Diol | 4,9 | 1,62 | 110 | 1760 | 48 | 6 |

| | | | | | | | | | |
|---|---|---|---|---|---|---|---|---|---|
| ¹ RF = Reißfestigkeit ² RD = Reißdehnung ³ ηᵣₑₗ = 0,5 % m-Kresol (DIN 53727) ⁴ Gew.-% ⁵ Gew.% ⁶ T_{E} = Tₘ für kristalline PA-12 bzw. T_{g} für amorphe PA ⁷ PPG-Diamin = Polypropylenglykoldiamin ⁸ PTBF-Diamin = Polyoxytetramethylendiamin ⁹ BD 1000 = Polybutylmethacrylatdiol ¹⁰ Poly-THF = Polytetrahydrofurandiol | | | | | | | | | |

### Beispiel 16

Zur Überprüfung der Verbundhaftung wurden zweiteilige DIN-Zugstäbe auf einer Arburg Allrounder 350-210-750 gefertigt und einem Zugversuch unterzogen.

Zunächst wurden Einlegeteile aus den erfindungsgemäßen Blockpolyesteramiden hergestellt, auf welche die entsprechenden Homopolymere aufgespritzt wurden. Die Verarbeitungstemperaturen wurden so gewählt, daß ein partielles Aufschmelzen der Einlegeteile an der gemeinsamen Kontaktfläche möglich war. Tabelle 2 faßt die im Zugversuch nach DIN 53455 ermittelten Reißfestigkeiten zusammen.

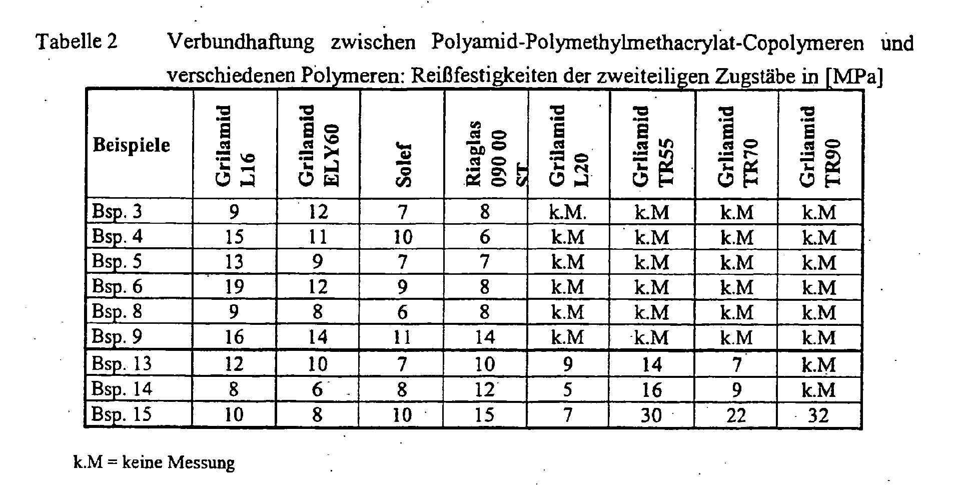

Grilamid L16 ist ein tiefviskoses und Grilamid L20 ein mittelviskoses Polyamid-12 der der Firma EMS CHEMIE. Grilamid L16 LM ist ein spezieller PA 12-Typ für die Kabel-ummantelung.

Grilamid ELY 60 ist ein Copolyamid der Firma EMS CHEMIE auf Basis von Lactam-12, Polyetherdiamin und dimerisierter Fettsäure mit einem Schmelzpunkt von ca. 160°C.

Solef 1008 ist ein Polyvinylidenfluorid der Firma Solvay mit einem MVI von 8 g/10 min gemessen bei 230° C und einer Last von 5 kg.

Riaglas 09000ST ist ein PMMA-Spritzgußtyp mit einem MVR von 2.3 gemessen bei 230°C und 3,80 kg Auflagemasse.

Grilamid TR55 und Grilamid TR70 sind amorphe Copolyamide auf Basis von Lactam-12, Isophthalsäure und 3,3'-Dimethyl-4,4'-diaminodicyclohexylmethan mit einer Glasübergangstemperatur von etwa 160°C bzw. 190°C.

Grilamid TR90 ist ein amorphes Polyamid auf Bais Dodecandisäure und 3,3'-Dimethyl-4,4'-diaminodicyclohexylmethan mit einer Glasübergangstemperatur von 155°C.

### Beispiel 17

Zur Überprüfung der Verbundhaftung wurden zweiteilige DIN-Zugstäbe auf einer Arburg Allrounder 350-210-750 gefertigt und einem Zugversuch unterzogen.

Zunächst wurden Einlegeteile aus den erfindungsgemäßen Blockpolyesteramiden hergestellt, auf welche Lexan 101, ein Polycarbonat der Firma GE Plastics Europe mit einem MVI von 6, gemessen bei 300 °C und 1,20 kg Auflagemasse, aufgespritzt wurde. Die Verarbeitungstemperaturen wurden so gewählt, dass ein partielles Aufschmelzen der Einlegeteile an der gemeinsamen Kontaktfläche möglich war.

Die Reißfestigkeit die im Zugversuch nach DIN 53455 ermittelt wird, beträgt 18 Mpa.

Überraschenderweise konnte erfindungsgemäß eine sehr gute Haftung der Blockpolymere zu Polycarbonat festgestellt werden.

### Beispiel 18

Auf einem ZSK-25 wurden bei einer Massetemperatur zwischen 200 und 240° C und einer Drehzahl im Bereich von150 bis 300 UPM sowie einem Durchsatz von 5-10 kg/h
a) Grilamid L16 A (aminterminiertes, niederviskoses PA-12) und Plexiglas 6N (PMMA von Röhm) ohne weiteren Zusatz im Verhältnis 1:2 und
b) 1 Teil Grilamid L16 A und 2 Teile Plexiglas 6N werden mit einem Zusatz von 10% eines Blockpolyesteramids aus den Beispielen 6-9 extrudiert.

Während bei der Extrusion unter a) ein nicht granulierbarer, stark pulsierender Strang resultierte oder gar das Compound in Form langgezogener Tropfen von der Austragsdüse abfiel und somit nicht abgezogen werden konnte, bildete sich bei der Extrusion b) ein homogener, nicht pulsierender Strang mit glatter Oberfläche, der problemlos granulierbar war. Betrachtet man die Phasenverteilung via REM, so erkennt man, daß die disperse Polyamidphase im Fall a) als Kugeln oder deformierte Zylinder mit einem Durchmesser von 2 bis 10 µm, im Fall b) deutlich homogener verteilt, mit Domänengrößen deutlich kleiner 0,5 µm, vorliegt. Dieses Ergebnis zeigt in eindeutiger Weise die verträglichkeitsvermittelnde Wirkung der erfindungsgemäßen Blockcopolymere in Polyamid-PMMA-Blends.

### Beispiel 19

Auf einer Technikumsanlage für Kabelummantelungen wurde ein auf PMMA-basierender Kunststofflichtwellenleiter der Firma Toray (Toray PFU FB 1000 L) mit folgendem Aufbau beschichtet:
Innenschicht: Haftvermittler aus Beispiel 6
Außenschicht: Grilamid L16 LM.

Die Abzugskraft wird an einer halbabisolierten Faser in einem Zug-Dehnungsexperiment gemessen. Es muß im Mittel eine Kraft von 50-60 N aufgebracht werden um die Faser aus dem Mantel zuziehen. Es liegt also eine sehr gute Haftung zwischen der Faser und dem Mantel vor.

### Vergleichsbeispiel 1

Durch Coextrusion wurde ein Kunststofflichtwellenleiter der Firma Toray (Toray PFU FB 1000 L) mit folgendem Aufbau beschichtet:
- Innenschicht:: Grilamid L16 A als Haftvermittler
- Außenschicht:: Grilamid L16 LM.

Die Abzugskraft wird an der halbabisolierten Faser in einem Zug-Dehnungsexperiment gemessen. Es muß eine Kraft von 10 N aufgebracht werden um die Faser aus dem Mantel zuziehen. Die Haftung zwischen Faser und Mantel ist ungenügend.

### Vergleichsbeispiel 2

Durch Coextrusion wurde ein Kunststofflichtwellenleiter der Firma Toray (Toray PFU FB 1000 L) mit folgendem Aufbau beschichtet:
- Innenschicht:: Lotader AX 8900 (Atofina, Copolymer aus Ethylen, Methylacrylat und Glycidylacrylat) als Haftvermittler
- Außenschicht:: Grilamid L16 LM.

Die Abzugskraft wird an der halbabisolierten Faser in einem Zug-Dehnungsexperiment gemessen. Es muß eine Kraft von 25 N aufgebracht werden um die Faser aus dem Mantel zuziehen. Die Haftung zwischen Faser und Mantel ist damit deutlich schlechter als in Beispiel 18 und genügt den Anforderungen, Haftsitz größer oder gleich 50 N, nicht.

## Patentansprüche

1. Thermoplastische Blockcopolymere der allgemeinen Formel (A): 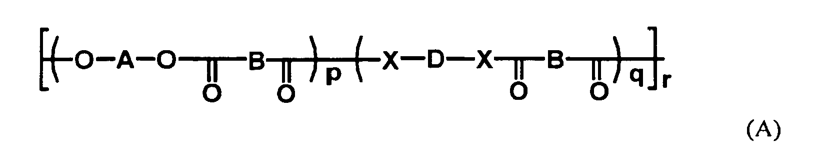 worin bedeuten:
p = eine ganze Zahl von 1 bis 20,
q = eine ganze Zahl von 1 bis 10, und
r = eine ganze Zahl von 1 bis 10,
enthaltend folgende Segmente (I), (II) und (III):
(I) mindestens 15Gew.-% von mindestens einem Polyalkyl(meth)acrylatdiol (HO-A-OH) der Formel (I): 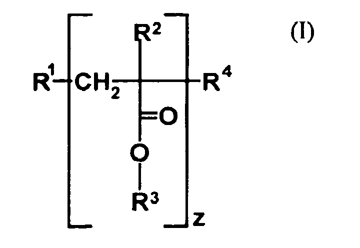 worin bedeuten:
z = eine ganze Zahl von 4 bis 50 und
R¹ = -S-R⁵-OH oder -C(C₆H₅)₂-R⁵-OH, -S-C(S)-N(C₂H₅)C₂H₄-OH,
R² = H, CH₃,
R³ = ein Alkylrest mit 1-12 C-Atomen, der gegebenenfalls halogeniert sein kann,
R⁴ = ein Rest aus der Gruppe aus (1), (2), (3):
(1) -R⁵-OH,
(2) -S-C(S)-N(C₂H₅)C₂H₄-OH,
(3) -CH₂-CHR²-CO-O-R⁵-OH,
worin bedeuten:
R⁵ = ein Rest aus der Gruppe aus (1), (2), (3):
(1) ein zweiwertiger aliphatischer, gegebenenfalls ungesättigter, Kohlenwasserstoffrest mit 2 bis 20 C-Atomen, ein cycloaliphatischer Kohlenwasserstoffrest mit bis zu 36 C-Atomen oder ein aliphatisch-aromatischer Kohlenwasserstoffrest mit 8 bis 20 C-Atomen,
(2) ein zweiwertiger, aliphatischer Etherrest -R⁶-O-R^{6'}, dessen Reste -R⁶und R^{6'} zusammen 4-20 C-Atome aufweisen,
(3) ein zweiwertiger Polyetherrest der allgemeinen Formel -(CₙH₂ₙO)ₘ-CₚH₂ₚ, worin n=2-4, m ≥ 1 und p=2-4 ist,
und das Polyalkyl(meth)acrylat (I) gegebenenfalls teilweise oder vollständig imidisiert vorliegt,
(II) mindestens 30 Gew.-% von mindestens einer Polyamiddicarbonsäure (HOOC-B-COOH) der allgemeinen Formel (IIa) oder (IIb): 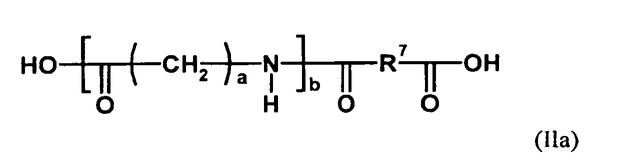 worin bedeuten:
a = eine ganze Zahl von 5 bis 11 und b = eine ganze Zahl von 2 bis 50,
oder 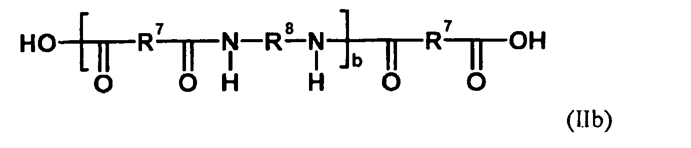 worin bedeuten:
b = eine ganze Zahl von 2 bis 40,
wobei in den Formeln (IIa) oder (IIb) R⁷ ein zweiwertiger aliphatischer, gegebenenfalls ungesättigter Kohlenwasserstoffrest mit 2-20 Kohlenstoffatomen, ein cycloaliphatischer Kohlenwasserstoff mit bis zu 36 C-Atomen oder ein aliphatisch-aromatischer Kohlenwasserstoffrest mit 8-20 C-Atomen,
R⁸ ein bifunktioneller aliphatischer Kohlenwasserstoffrest mit 2-12 C-Atomen, ein cycloaliphatischer Kohlenwasserstoffrest mit 6-20 C-Atomen, ein aliphatisch-aromatischer Kohlenwasserstoffrest mit 8-20 C-Atomen oder ein zweiwertiger, aliphatischer Etherrest -R⁶-O-R^{6'}-, dessen Reste R⁶ und R^{6'} zusammen 4-20 C-Atome aufweisen,
(III) 1-20 Gew.-% mindestens eines Diols oder Diamins der Formel (III):
HX-D-XH (III),
worin X = NH oder O,
und wobei D ausgewählt ist aus der Gruppe aus (1), (2), (3), (4), (5):
(1) ein zweiwertiger aliphatischer, gegebenenfalls cycloaliphatischer Kohlenwasserstoffrest mit 4-36 C-Atomen, der gegebenenfalls ungesättigt sein kann,
(2) ein aliphatisches Olefinpolymerisat einer Molmasse von 500-4000 g/mol, gegebenenfalls ungesättigt,
(3) ein zweiwertiger Polyetherrest der allgemeinen Formel -(CₙH₂ₙO)ₘ-CₚH₂ₚ-, worin n = eine ganze Zahl von 2-4, p = eine ganze Zahl von 2-4 und die Molmasse des Polyetherests 400-2500 g/mol ist,
(4) ein Polyesterrest der allgemeinen Formel (IVa) oder (IVb): 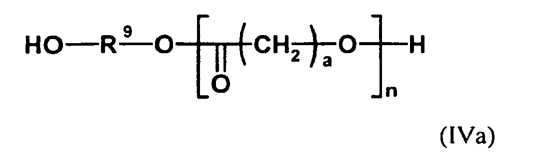 worin a = eine ganze Zahl von 5 bis 11 und
n = eine ganze Zahl von 5 bis 30 ist,
oder 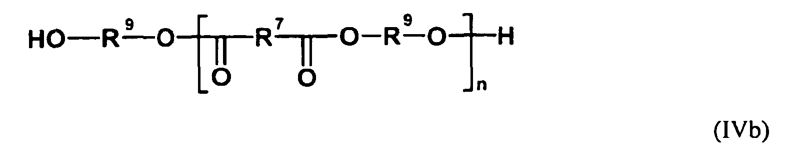 worin n = eine ganze Zahl von 3 bis 20 ist,
wobei in den Formeln (IVa) oder (IVb) R⁹ = ein aliphatischer oder cycloaliphatischer Kohlenwasserstoffrest mit 2-36 Kohlenstoffatomen, und
R⁷ ein zweiwertiger aliphatischer, gegebenenfalls ungesättigter Kohlenwasserstoffrest mit 2-20 Kohlenstoffatomen, ein cycloaliphatischer Kohlenwasserstoff mit bis zu 36 C-Atomen oder ein aliphatisch-aromatischer Kohlenwasserstoffrest mit 8-20 C-Atomen ist;
(5) ein organischer Polysiloxanrest mit einer Molmasse von 500-3000 g/mol,
und wobei sich die Komponenten (I), (II) und (III) auf 100 Gew.-% ergänzen.

2. Thermoplastische Blockcopolymere gemäß Anspruch 1, **dadurch gekennzeichnet, dass** sie
- mindestens 30 Gew.-% von mindestens einem Polyalkyl(meth)acrylatdiol (HO-A-OH) der Formel (I),
- 40 bis 60 Gew.-% von mindestens einer Polyamiddicarbonsäure (HOOC-B-COOH) der allgemeinen Formel (IIa) oder (IIb) und
- 1 bis 10 Gew.-% mindestens eines Diols oder Diamins der Formel (III) enthalten, wobei sich die Summe der Komponenten (I), (II) und (III) auf 100 Gew.-% ergänzt.

3. Thermoplastische Blockcopolymere gemäß den Ansprüchen 1 oder 2, **dadurch gekennzeichnet, dass** die Polyamidsegmente zahlenmittlere Molmassen im Bereich von 500 bis 5000 g/Mol, bevorzugt im Bereich zwischen 750 bis 2500 g/Mol, aufweisen.

4. Thermoplastische Blockcopolymere gemäß einem der Ansprüche 1 bis 3, **dadurch gekennzeichnet, dass** die Polyamidsegmente aufgebaut sind aus Monomeren, ausgewählt aus der Gruppe der Lactame mit 6 bis 12 Kohlenstoffatomen, der α,ω-Aminocarbonsäuren mit 6 bis 12 Kohlenstoffatomen, der aliphatischen Diamine mit 2 bis 10 Kohlenstoffatomen und Dicarbonsäuren mit 2 bis 44 Kohlenstoffatomen und aliphatischen oder cycloaliphatischen Diamine mit 2 bis 18 Kohlenstoffatomen.

5. Thermoplastische Blockcopolymere gemäß Anspruch 1, **dadurch gekennzeichnet, dass** die Polyalkyl(meth)acrylate (I) α,ω-funktionalisierte Polyalkyl(meth)acrylate sind und zahlenmittlere Molmassen im Bereich von zwischen 600 und 5000 g/Mol, bevorzugt im Bereich zwischen 900 und 2500 g/Mol, aufweisen.

6. Thermoplastische Blockcopolymere gemäß Anspruch 1, **dadurch gekennzeichnet, dass** als Diol oder Diamin der Formel (III) wenigstens eines ausgewählt wird aus der Gruppe, bestehend aus Butandiol, Hexandiol, Cyclohexandimethanol, Dodecandiol, Dimerdiol, Hexamethylendiamin, Dodecandiamin, 2,2,4- und 2,4,4-Trimethylhexamethylendiamin, 3,3'-Dimethyl-4,4'-diaminodicyclohexylmethan, 4,4'-Diaminodicyclohexylmethan, Polyethylenglykoldiol, Polypropylenglykoldiol, Polytetramethylendiole, Polyethylenglykoldiamine, Polypropylenglykoldiamine, Polytetramethylendiamine, Polybutadiendiole und Poly(butadien-co-ethylen)-diole, gegebenenfalls hydriert, Polycaprolactondiole, Polyesterdiole auf Basis von aliphatischen oder aromatischen Dicarbonsäuren und aliphatischen oder cycloaliphatischen C₂-C₃₆ Diolen oder aromatischen C₆-C₁₈ Diolen.

7. Verfahren zur Herstellung von thermoplastischen Blockcopolymeren gemäß einem oder mehreren der Ansprüche 1 bis 6, **dadurch gekennzeichnet, dass**
(A) in einem ersten Polymerisations- oder Polykondensationsschritt bei Temperaturen von 180 bis 300°C, einem Druck von Atmosphärendruck bis 3 x 10⁶ Pas (30 bar) Polyamid- oder Copolyamidblöcke mit einer zahlenmittleren Molmasse im Bereich von 500 bis 5000 g/Mol, bevorzugt im Bereich von zwischen 750 bis 2500 g/Mol, mit einer Amino-Endgruppenkonzentration von höchstens 50 mMol/kg, gegebenenfalls unter Zusatz von Komponente D, wenn X = N in Formel (III), hergestellt werden und zur Reduktion des Wassergehalts mindestens 0,5 Stunden bei einem Druck von 50 mbar bis Atmosphärendruck entgast wird, in einem zweiten Schritt,
(B) α,ω-funktionalisierte Polyalkyl(meth)acrylatdiole mit einer zahlenmittleren Molmasse im Bereich von zwischen 600 und 5000 g/Mol, bevorzugt im Bereich von zwischen 900 und 2500 g/Mol, als Festsubstanz, Lösung oder Schmelze zusammen mit der gesamten bzw. einem Teil der Diolkomponente (III), im Fall, wenn X = O in Formel III, zugegeben werden, bzw. gegebenenfalls Komponente (III), im Fall, wenn X = O in Formel (III), mit dem Polyalkyl(meth)acrylatdiol der Formel (I), im Falle, wenn R⁴ = (3), in einem parallelen Kondensationsschritt zu einem Polyester diol umgesetzt wird und
(C) das Reaktionsgemisch bei einer Temperatur von 180 bis 300°C, in Gegenwart von 0,05 bis 0,2 Gew.-% eines Katalysators, in einem weiteren Polykondensationsschritt bei vermindertem Druck zum hochmolekularen Blockcopolymer (A) fertig kondensiert,
(D) ausgetragen oder zu Formkörpern weiterverarbeitet wird.

8. Verwendung der thermoplastischen Blockcopolymere nach einem oder mehreren der vorhergehenden Ansprüche 1 bis 6 zur Herstellung von Fasern, Folien, Formkörpern und Schmelzkleber.

9. Verwendung der thermoplastischen Blockcopolymere gemäß einem der Ansprüche 1 bis 6 als Haft- oder Verträglichkeitsvermitter in Coextrudaten auf der Basis von (Co)Polyamid und Polyalkyl(meth)acrylat.

10. Verwendung der thermoplastischen Blockcopolymere gemäß einem der Ansprüche 1 bis 6 als Haft- oder Verträglichkeitsvermittler in Coextrudaten auf der Basis von (Co)Polyamid und Polycarbonat.

11. Thermoplastischer Mehrschichtverbund, bestehend aus
(a) mindestens einer Schicht aus einer Formmasse auf Basis von (Co)Polyamid,
(b) mindestens einer Schicht aus einer Formmasse aus einem thermoplastischen Werkstoff, ausgewählt aus der Gruppe, bestehend aus Polyalkyl(meth)acrylaten und Polycarbonaten, wobei die Polyalkyl(meth)acrylate Homopolymere oder Copolymere sind, bei denen bis zu 50 Mol-% des Alkyl(meth)acrylats durch andere Monomere aus der Gruppe aus Butylmethacrylat, Butylacrylat, Methacrylsäure, Itaconsäure, Styrol, Maleinsäureanhydrid ersetzt sein können, der Fluorpolymere, oder der perfluorierten Polymere oder Gemischen der vorgenannten Verbindungen und
(c) mindestens einer zwischen (a) und (b) liegenden Schicht auf Basis einer Mischung aus den die Schichten (a) und (b) aufbauenden Polymeren, wobei wenigstens ein Teil der Mischung oder die gesamte Mischung aus den thermoplastischen Blockcopolymeren gemäß einem oder mehreren der Ansprüche 1 bis 6 bestehen kann.

12. Thermoplastischer Mehrschichtverbund gemäß Anspruch 11, **dadurch gekennzeichnet, dass** die mindestens eine Schicht aus einer Formmasse auf Basis von (Co)Polyamid (a) eine Schicht aus einer Formmasse auf Basis von Polyamid 12, von Polyamid 12-Copolymeren, auf Basis einer Polyamid 12 aufbauenden Polymerlegierung oder einer Schicht aus einem amorphen Polyamid oder einer Polymerlegierung auf Basis eines amorphen Polyamids ist.

13. Mehrschichtverbund gemäß Anspruch 11 oder 12, **dadurch gekennzeichnet, dass** die mindestens eine Schicht aus einer Formmasse auf Basis von (Co)Polyamid ein amorphes Polyamid aus den Monomerbausteinen Terephthalsäure und dem Isomerengemisch aus 2,2,4- und 2,4,4-Trimethylhexamethylendiamin, das Copolyamid aus Isophthalsäure, 3,3'-Dimethyl-4,4'-diaminodicyclohexylmethan und Laurinlactam sowie das Polyamid aus 1,12-Dodecandicarbonsäure und 4,4'-Diaminodicyclohexylmethan bzw. 3,3'-Dimethyl-4,4'-diaminodicyclohexylmethan ist.

14. Thermoplastischer Mehrschichtverbund gemäß Anspruch 11, **dadurch gekennzeichnet, dass** das Polyalkyl(meth)acrylat der Schicht (b) ein Polyalkylmethacrylat mit 1 bis 12 Kohlenstoffatomen in der Kohlenstoffkette des Alkylrests ist, der ggf. teilweise oder vollständig fluoriert ist, wobei Polymethylmethacrylat und Polybutylmethacrylat bevorzugt sind.

15. Thermoplastischer Mehrschichtverbund gemäß den Ansprüchen 1 bis 14, **dadurch gekennzeichnet, dass** er ein Gehäuse oder Gehäuseteil eines Mobilfunktelefons ist.

16. Thermoplastischer Mehrschichtverbund gemäß einem oder mehreren der Ansprüche I bis 14, **dadurch gekennzeichnet, dass** er eine Mehrschicht-Polymerschlauch- oder -rohrleitung ist, die ggf. mindestens in einem Teilbereich gewellt ist.

17. Mehrschicht-Schlauch oder -Rohrleitung gemäß Anspruch 16, **dadurch gekennzeichnet, dass** sie aus mindestens einer Innenschicht aus thermoplastisch verarbeitbaren Fluorpolymeren, einer Außenschicht aus Polyamid, wobei Polyamid-12 oder Polyamid-12-Abkömmlinge besonders bevorzugt sind, und einer dazwischen liegenden Haftvermittlerschicht auf Basis der thermoplastischen Blockcopolymere gemäß einem der Ansprüche 1 bis 6 besteht.

18. Mehrschicht-Schlauch oder -Rohrleitung gemäß Anspruch 16, **dadurch gekennzeichnet, dass** die Fluorpolymeren ausgewählt sind aus Polyvinylidenfluorid (PVDF) oder aus Fluorpolymeren auf Basis von Tetrafluorethylen (TFE), Hexafluorpropylen (HFP) und Vinylidenfluorid (VDF) oder Fluorpolymeren auf Basis von Tetrafluorethylen (TFE), Perfluormethylvinylether (PMVE) und Vinylidenfluorid (VDF), wobei PVDF oder ein Terpolymer aus Tetrafluorethylen, Hexafluorpropylen, Vinylidenfluorid bevorzugt ist.

19. Mehrschichtverbund gemäß einem der Ansprüche 11 bis 17, **dadurch gekennzeichnet, daß** er durch Spritzgussextrusion, Kalandrieren oder Verschweißen hergestellt worden ist.

20. Optische Ader mit einem Faserkem und einem ein- oder mehrschichtig aufgebauten Fasermantel aufweisenden Kunststoff-Lichtwellenleiter (K-LWL) und mindestens einer den K-LWL umschließenden Schutzhülle, wobei der Fasermantel oder zumindest seine äußere Schicht aus einem fluorhaltigen Kunststoff und die Schutzhülle aus Polyamid bestehen, **dadurch gekennzeichnet, dass** die Schutzhülle aus Polyamiden oder Copolyamiden oder deren Gemischen mit einem Schmelzpunkt von unter 220°C besteht und der Fasermantel aus Vinylidenfluorid, Tetrafluorethen, Hexafluorpropen, Methacrylsäuretetrafluorpropylester, Methacrylsäure-pentafluorpropylester, Methacrylsäuretrifluorethylester, Methacrylsäure-heptadecafluordecylester sowie aus Mischungen oder Copolymerisaten der genannten Stoffe, wahlweise auch aus Acrylsäure- und Acrylatmodifizierten Polymeren, Copolymeren oder Polymermischungen besteht und die Haftung zwischen Fasermantel und Schutzschicht durch die thermoplastischen Blockcopolymere gemäß einem der Ansprüche 1 bis 6 hergestellt ist.

## Claims

1. Thermoplastic block copolymers of the general formula (A): 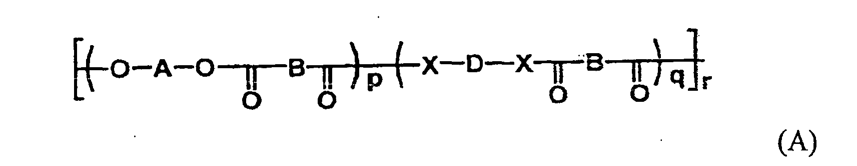 in which:
p = a whole number between 1 and 20,
q = a whole number between 1 and 10, and
r = a whole number between 1 and 10,
containing the following segments (I), (II) and (III):
(I) at least 15 % by wt. of at least one polyalkyl (meth)acrylate diol (HO-A-OH) of Formula (I): 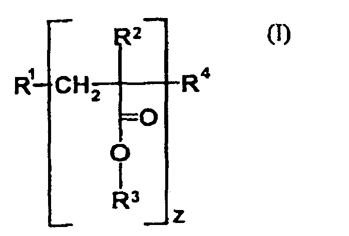 in which:
z = a whole number between 4 and 50 and
R¹ = -S-R⁵-OH or -C(C₆R₅)₂-R⁵-OH, -S-C(S)-N(C₂H₅)C₂H₄-OH,
R² = H, CH₃,
R³ = an alkyl residue having 1-12 C atoms, which may possibly be halogenated,
R⁴ = a residue from the group of (1), (2), (3):
(1) -R⁵-OH,
(2) -S-C(S)-N(C₂H₅)C₂H₄-OH,
in which:
R⁵ = a residue from the group of (1), (2), (3):
(1) a bivalent aliphatic, possibly unsaturated, hydrocarbon residue having 2 to 20 C atoms, a cycloaliphatic hydrocarbon residue having up to 36 C atoms or an aliphatic-aromatic hydrocarbon residue having 8 to 20 C atoms,
(2) a bivalent, aliphatic ether residue -R⁶-O-R^{6'}, the residues -R⁶ and R^{6'} of which together have 4-20 C atoms, and
(3) a bivalent polyether residue of the general formula -(CₙH₂ₙO)ₘ-CₚH₂ₚ, in which n = 2-4, m ≥ 1 and p = 2-4,
and the polyalkyl (meth)acrylate (I) is possibly present partially or wholly imidised,
(II) at least 30 % by wt. of at least one polyamide dicarboxylic acid (HOOC-B-COOH) of the general formula (IIa) or (IIb): 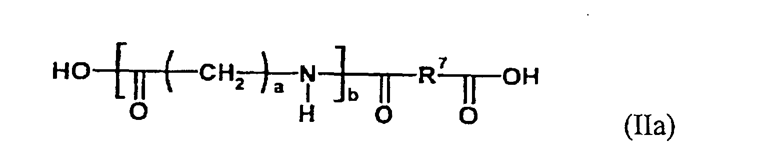 in which:
a = a whole number between 5 and 11, and b = a whole number between 2 and 50,
or 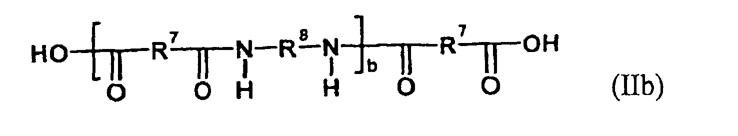 in which:
b = a whole number between 2 and 40,
wherein, in Formulae (IIa) or (IIb), R⁷ has a bivalent aliphatic, possibly unsaturated hydrocarbon residue having 2-20 carbon atoms, a cycloaliphatic hydrocarbon having up to 36 C atoms or an aliphatic-aromatic hydrocarbon residue having 8-20 C atoms, R⁸ is a bifunctional, aliphatic hydrocarbon residue having 2-12 C atoms, a cycloaliphatic hydrocarbon residue having 6-20 C atoms, an aliphatic-aromatic hydrocarbon residue having 8-20 C atoms or a bivalent, aliphatic ether residue -R⁶-O-R^{6'}-, the residues R⁶ and R^{6'} of which together have 4-20 C atoms,
(III) 1-20 % by wt. at least of one diol or diamine of Formula (III):
HX-D-XH (III),
in which X = NH or O,
and wherein D is selected from the group of (1), (2), (3), (4), (5):
(1) a bivalent aliphatic, possibly cycloaliphatic hydrocarbon residue having 4-36 C atoms, which may possibly be unsaturated,
(2) an aliphatic olefin polymeride of a mole mass of 500-4000 g/mole, possibly unsaturated,
(3) a bivalent polyether residue of the general formula -(CₙH₂ₙO)ₘ-CₚH₂ₚ-, in which n = a whole number of 2-4, p = a whole number of 2-4, and the mole mass of the polyether residue is 400-2500 g/mole,
(4) a polyester residue of the general formula (IVa) or (IVb): 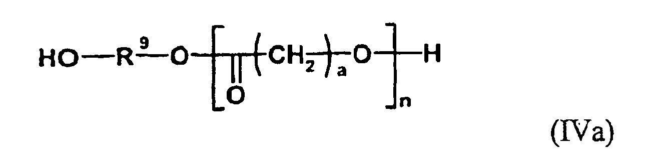 in which a = a whole number between 5 and 11 and
n = a whole number between 5 and 30,
or 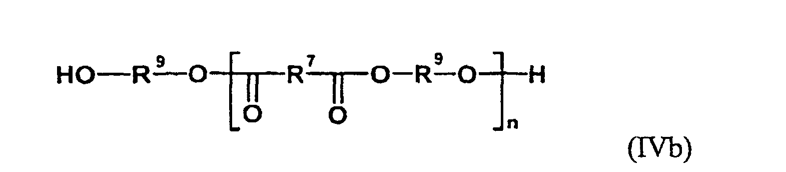 in which n = a whole number between 3 and 20,
wherein, in the formulae (IVa) or (IVb), R⁹ = an aliphatic or cycloaliphatic hydrocarbon residue having 2-36 carbon atoms, and R⁷ is a bivalent aliphatic, possibly unsaturated hydrocarbon residue having 2-20 carbon atoms, a cycloaliphatic hydrocarbon having up to 36 C atoms, or an aliphatic-aromatic hydrocarbon residue having 8-20 C atoms;
(5) an organic polysiloxan residue with a mole mass of 500-3000 g/mole,
and wherein the components (I), (II) and (III) add up to 100 % by wt.

2. Thermoplastic block copolymers according to claim 1, **characterised in that** they contain
- at Least 30 % by wt. of at least one polyalkyl (meth)acrylate diol (HO-A-OH) of Formula (I),
- 40 to 60 % by wt of at least one polyamide dicarboxylic acid (HOOC-B-COOH) of the general formula (IIa) or (IIb), and
- 1 to 10 % by wt at least of one diol or diamine of Formula (III),
the sum of the components (I), (II) and (III) adding up to 100 % by wt.

3. Thermoplastic block copolymers according to claim 1 or 2, **characterised in that** the polyamide segments have numerically mean mole masses within the range of between 500 and 5000 g/mole, preferably within the range of between 750 and 2500 g/mole.

4. Thermoplastic block copolymers according to one of claims 1 to 3, **characterised in that** the polyamide segments are constructed from monomers, selected from the group of lactams having 6 to 12 carbon atoms, of α,ω-aminocarboxylic acids having 6 to 12 carbon atoms, of aliphatic diamines having 2 to 10 carbon atoms and dicarboxylic acids having 2 to 44 carbon atoms and aliphatic or cycloaliphatic diamines having 2 to 18 carbon atoms.

5. Thermoplastic block copolymers according to claim 1, **characterised in that** the polyalkyl (meth)acrylates (I) are α,ω-functionalised polyalkyl (meth)acrylates and have numerically mean mole masses within the range of between 600 and 5000 g/mole, preferably within the range of between 900 and 2500 g/mole.

6. Thermoplastic block copolymers according to claim 1, **characterised in that**, as the diol or diamine of Formula (III), at least one is selected from the group comprising butane diol, hexane diol, cyclohexane dimethanol, dodecane diol, dimer diol, hexamethylene diamine, dodecane diamine, 2,2,4- and 2,4,4-trimethyl, hexamethylene diamine, 3,3'-dimethyl-4,4'-diaminodicyclohexyl methane, 4,4'-diaminodicyclohexyl methane, polyethylene glycol diol, polypropylene glycol diol, polytetramethylene diols, polyethylene glycol diamines, polypropylene glycol diamines, polytetramethylene diamines, polybutadiene diols and poly(butadiene-co-ethylene) diols, possibly hydrated, polycaprolactone diols, polyester diols based on aliphatic or aromatic dicarboxylic acids and aliphatic or cycloaliphatic C₂-C₃₆ diols or aromatic C₆-C₁₈ diols.

7. Method of producing thermoplastic block copolymers according to one or more of claims 1 to 6, **characterised in that**
(A) in a first polymerisation or polycondensation step at temperatures of between 180 and 300° C, and at a pressure between atmospheric pressure and 3 x 10⁶ Pas (30 bar), polyamide blocks or copolyamide blocks are produced with a numerically mean mole mass within the range of between 500 and 5000 g/mole, preferably within the range of between 750 and 2500 g/mole, and with an amino end group concentration of, at most, 50 mmole/kg, possibly by the addition of component D, when X = N in Formula (III), and degasification occurs to reduce the water content for at least 0.5 hours at a pressure of between 50 mbar and atmospheric pressure, in a second step,
(B) α,ω-functionalised polyalkyl (meth)acrylate diols, having a numerically mean mole mass within the range of between 600 and 5000 g/mole, preferably within the range of between 900 and 2500 g/mole, are added as the solid substance, solution or molten mass together with the entire, or respectively a portion of the, diol component (III) in the case when X = O in Formula (III), or respectively possibly component (III), in the case when X = O in Formula (III), is reacted with the polyalkyl (meth)acrylate diol of Formula (I), in the case when R⁴ = (3), in a parallel condensation step to form a polyester diol, and
(C) the reaction mixture finally condenses at a temperature of between 180 and 300° C, in the presence of between 0.05 and 0.2 % by wt. of a catalyst, in an additional polycondensation step at a reduced pressure to form the high- molecular block copolymer (A), and
(D) is discharged or is further processed to form moulded bodies.

8. Use of the thermoplastic block copolymers according to one or more of the preceding claims 1 to 6 to produce fibres, films, moulded bodies and hotmelt-type adhesives.

9. Use of the thermoplastic block copolymers according to one of claims 1 to 6 as bonding or compatibility agents in co-extrudates based on (co)polyamide and polyalkyl (meth)acrylate.

10. Use of the thermoplastic block copolymers according to one of claims 1 to 6 as bonding or compatibility agents in co-extrudates based on (co)polyamide and polycarbonate.

11. Thermoplastic multi-layered composite structure, comprising
(a) at least one layer formed from a moulding composition based on (co)polyamide,
(b) at least one layer formed from a moulding composition of a thermoplastic material, selected from the group comprising polyalkyl (meth)acrylates and polycarbonates, wherein the polyalkyl (meth)acrylates are homopolymers or copolymers, where up to 50 mole % of the alkyl (meth)acrylate may be replaced by other monomers from the group comprising butyl methacrylate, butyl acrylate, methacrylic acid, itaconic acid, styrene, maleic acid anhydride, fluoropolymers, or perfluorinated polymers or mixtures of the aforementioned compounds, and
(c) at least one layer, lying between (a) and (b), based on a mixture of the polymers which build-up the layers (a) and (b), wherein at least a portion of the mixture or the entire mixture may comprise the thermoplastic block copolymers according to one or more of claims 1 to 6.

12. Thermoplastic multi-layered composite structure according to claim 11, **characterised in that** the at least one layer is formed from a moulding composition based on (co)polyamide (a), one layer is formed from a moulding composition based on polyamide 12, based on polyamide 12 copolymers, based on a polymer alloy, which builds-up polyamide 12, or based on a layer of an amorphous polyamide or a polymer alloy based on an amorphous polyamide.

13. Multi-layered composite structure according to claim 11 or 12, **characterised in that** the at least one layer is formed from a moulding composition based on (co)polyamide, an amorphous polyamide is formed from the monomer building blocks terephthalic acid and the isomer mixture of 2,2,4-and 2,4,4-trimethyl hexamethylene diamine, the copolyamide is formed from isophthalic acid, 3,3'-dimethyl-4,4'-diaminodicyclohexyl methane and lauric lactam, and the polyamide is formed from 1,12-dodecane dicarboxylic acid and 4,4'-diaminodicyclohexyl methane or respectively 3,3'-dimethyl-4,4'-diaminodicyclohexyl methane.

14. Thermoplastic multi-layered composite structure according to claim 11, **characterised in that** the polyalkyl (meth)acrylate of layer (b) is a polyalkyl methacrylate having 1 to 12 carbon atoms in the carbon chain of the alkyl residue, which is possibly partially or wholly fluorinated, polymethyl methacrylate and polybutyl methacrylate being preferred.

15. Thermoplastic multi-layered composite structure according to claims 1 to 14, **characterised in that** it is a housing or housing part of a mobile radio telephone.

16. Thermoplastic multi-layered composite structure according to one or more of claims 1 to 14, **characterised in that** it is a multi-layered polymer hosepipe or pipeline, which is possibly undulatory at least in a partial region.

17. Multi-layered hose or pipeline according to claim 16, **characterised in that** it is formed from at least one internal layer of thermoplastically processable fluorine polymers, an external layer of polyamide, polyamide 12 or polyamide 12 derivatives being particularly preferred, and an interposed bonding agent layer based on the thermoplastic block copolymers according to one of claims 1 to 6.

18. Multi-layered hose or pipeline according to claim 16, **characterised in that** the fluorine polymers are selected from polyvinylidene fluoride (PVDF) or from fluorine polymers based on tetrafluoroethylene (TFE), hexafluoropropylene (HFP) and vinylidene fluoride (VDF) or fluorine polymers based on tetrafluoroethylene (TFE), perfluoromethyl vinyl ether (PMVE) and vinylidene fluoride (VDF), PVDF or a terpolymer formed from tetrafluoroethylene, hexafluoropropylene or vinylidene fluoride being preferred.

19. Multi-layered composite structure according to one of claims 11 to 17, **characterised in that** it has been produced by extrusion-moulding, calendering or welding.

20. Optical conductors having a fibrous core and a plastics material lightwave conductor (PM-LWC), which has a fibrous covering and is built-up of single or multiple layers, and at least one protective sleeve, surrounding the PM-LWC, the fibrous covering or at least its outer layer being formed from a fluorine-containing plastics material, and the protective sleeve being formed from polyamide, **characterised in that** the protective sleeve is formed from polyamides or copolyamides or mixtures thereof having a melting point of below 220° C, and the fibrous covering is formed from vinylidene fluoride, tetrafluoroethene, hexafluoropropene, methacrylic acid tetrafluoropropyl ester, methacrylic acid pentafluoropropyl ester, methacrylic acid trifluoroethyl ester, methacrylic acid heptadecafluorodecyl ester and from mixtures or copolymerides of said substances, selectively also formed from acrylic acid- and acrylate-modified polymers, copolymers or polymer mixtures, and the adhesion between the fibrous covering and the protective layer is produced by the thermoplastic block copolymers according to one of claims 1 to 6.

## Revendications

1. Copolymères à blocs thermoplastiques de formule générale (A) 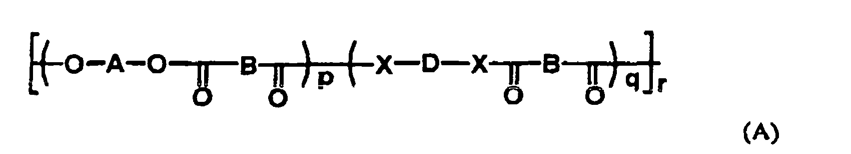 où
p = un nombre entier de 1 à 20,
q = un nombre entier de 1 à 10, et
r = un nombre entier de 1 à 10,
contenant les segments suivants (I), (II) et (III) :
(I) au moins 15 % en poids d'au moins un diol de polyalkyl(méth)acrylate (HO-A-OH) de formule (I) : 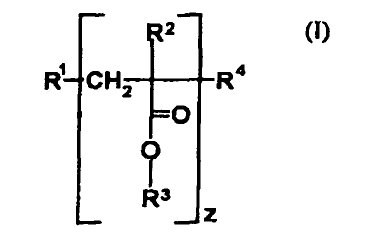 où :
z = un nombre entier de 4 à 50 et
R¹ = -S-R⁵-OH ou -C(C₆H₅)₂-R⁵-OH, -S-C(S)-N(C₂H₅)C₂H₄-OH,
R² = H, CH₃,
R³ = un radical alkyle ayant de 1 à 12 atomes de C, qui peut être le cas échéant halogéné,
R⁴ = un radical issu du groupe constitué de (1), (2), (3) :
(1) -R⁵-OH,
(2) -S-C(S)-N(C₂H₅)C₂H₄-OH
(3) -CH₂-CHR²-CO-O-R⁵-OH,
où:
R₅ = un radical issu du groupe de (1), (2), (3) :
(1) un radical hydrocarbure divalent aliphatique, le cas échéant insaturé, ayant de 2 à 20 atomes de C, un radical hydrocarbure cycloaliphatique ayant jusqu'à 36 atomes de C ou un radical hydrocarbure aliphatico-aromatique ayant de 8 à 20 atomes de C,
(2) un radical éther divalent, aliphatique -R⁶-O-R^{6'}, dont les radicaux -R⁶ et R^{6'} présentent conjointement 4 à 20 atomes de C,
(3) un radical polyéther divalent de formule générale -(CₙH₂ₙO)ₘ-CₚH₂ₚ, où n = 2-4, m ≥ 1 et p = 2-4,
et le polyalkyl(méth)acrylate (I) se présente sous forme le cas échéant partiellement ou entièrement imidée,
(II) au moins 30 % en poids d'au moins un acide dicarboxylique de polyamide (HOOC-B-COOH) de formule générale (IIa) ou (IIb) : 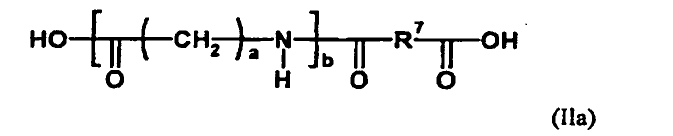 où :
a = un nombre entier de 5 à 11 et b = un nombre entier de 2 à 50, ou 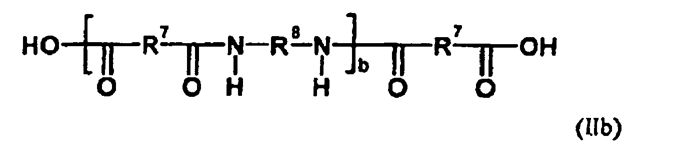 où:
b = un nombre entier de 2 à 40,
où, dans les formules (IIa) ou (IIb), R⁷ représente un radical hydrocarbure divalent aliphatique, le cas échéant insaturé, ayant de 2 à 20 atomes de carbone, un hydrocarbure cycloaliphatique ayant jusqu'à 36 atomes de C ou un radical hydrocarbure aliphatico-aromatique ayant de 8 à 20 atomes de C,
R⁸ représente un radical hydrocarbure aliphatique difonctionnel ayant de 2 à 12 atomes de C, un radical hydrocarbure cycloaliphatique ayant de 6 à 20 atomes de C, un radical hydrocarbure aliphatico-aromatique ayant de 8 à 20 atomes de C ou un radical éther aliphatique divalent R⁶-O-R^{6'}, dont les radicaux -R⁶ et R^{6'} présentent conjointement 4 à 20 atomes de C,
(III) 1 à 20 % en poids d'au moins un diol ou une diamine de formule (III) :
HX-D-XH (III),
où X = NH ou O,
et où D est choisi dans le groupe constitué de (1), (2), (3), (4), (5) :
(1) un radical hydrocarbure divalent aliphatique, le cas échéant cycloaliphatique, ayant de 4 à 36 atomes de C, qui peut être le cas échéant insaturé,
(2) un polymère d'oléfine aliphatique d'une masse molaire de 500 à 4000 g/mol;
(3) un radical polyéther divalent de formule générale -(CₙH₂ₙO)ₘ-CₚH₂ₚ, où n = un nombre entier de 2-4, p = un nombre entier de 2-4 et la masse molaire du radical polyéther est de 400 à 2500 g/mol,
(4) un radical polyéther de formule générale (IVa) ou (IVb) : 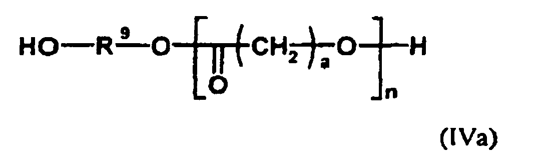 où a = un nombre entier de 5 à 11 et
n = un nombre entier de 5 à 30,
ou 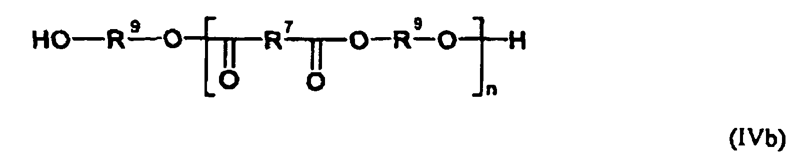 où n = un nombre entier de 3 à 20,
où, dans les formules (IVa) ou (IVb), R⁹ = un radical hydrocarbure aliphatique ou cycloaliphatique ayant de 2 à 36 atomes de carbone et
R⁷ est un radical hydrocarbure divalent aliphatique, le cas échéant insaturé, ayant de 2 à 20 atomes de carbone, un hydrocarbure cycloaliphatique ayant jusqu'à 36 atomes de C ou un radical hydrocarbure aliphatico-aromatique ayant de 8 à 20 atomes de C,
(5) un radical polysiloxane organique ayant une masse molaire de 500 à 3000 g/mol,
et où les composants (I), (II) et (III) se complètent pour donner 100 % en poids.

2. Copolymères à blocs thermoplastiques selon la revendication 1, **caractérisés en ce qu'**ils comprennent :
- au moins 30% en poids d'au moins un diol de polyalkyl(méth)acrylate (HO-A-OH) de formule (I),
- 40 à 60% en poids d'au moins un acide dicarboxylique de polyamide (HOOC-B-COOH) de formule générale (IIa) ou (IIb) et
- 1 à 10% en poids d'au moins un diol ou une diamine de formule (III),
la somme des composants (I), (II) et (III) se complétant pour faire 100% en poids.

3. Copolymères à blocs thermoplastiques selon les revendications 1 ou 2, **caractérisés en ce que** les segments de polyamide présentent des masses molaires moyennes en nombre dans la plage de 500 à 5000 g/mol, de préférence dans la plage de 750 à 2500 g/mol.

4. Copolymères à blocs thermoplastiques selon l'une des revendications 1 à 3, **caractérisés en ce que** les segments de polyamide sont constitués de monomères, choisis dans le groupe constitué des lactames ayant de 6 à 12 atomes de carbone, des acides α,ω-aminocarboxyliques ayant de 6 à 12 atomes de carbone, des diamines aliphatiques ayant de 2 à 10 atomes de carbone et des acides dicarboxyliques ayant de 2 à 44 atomes de carbone et des diamines aliphatiques ou cycloaliphatiques ayant de 2 à 18 atomes de carbone.

5. Copolymères à blocs thermoplastiques selon la revendication 1, **caractérisés en ce que** les polyalkyl(méth)acrylates (I) sont des polyalkyl(méth)acrylates α,ω-fonctionnalisés et présentent des masses molaires moyennes en nombre dans la plage située entre 600 et 5000 g/mol, de préférence dans la plage située entre 900 et 2500 g/mol.

6. Copolymères à blocs thermoplastiques selon la revendication 1, **caractérisés en ce que** l'on choisit, à titre de diol ou de diamine de formule (III), au moins un composé du groupe constitué par le butanediol, l'hexanediol, le cyclohexanediméthanol, le dodécanediol, le diol dimérique, l'hexaméthylène diamine, la dodécane diamine, la 2,2,4- et 2,4,4-triméthylhexaméthylène diamine, le 3,3'-diméthyl-4,4'-diaminodicyclohexylméthane, le 4,4'-diaminodicyclohexylméthane, le diol de polyéthylène glycol, le diol de polypropylène glycol, les diols de polytétraméthylène, les diamines de polyéthylène glycol, les diamines de polypropylène glycol, les polytétraméthylène diamines, les diols de polybutadiène et les diols de poly(butadiène-co-éthylène), le cas échéant hydrogénés, les diols de polycaprolactone, les diols de polyester à base d'acides dicarboxyliques aliphatiques ou aromatiques et les diols en C₂-C₃₆ aliphatiques ou cycloaliphatiques ou les diols en C₆-C₁₈ aromatiques.

7. Procédé de fabrication de copolymères à blocs thermoplastiques selon l'une ou plusieurs des revendications 1 à 6, **caractérisé en ce que**
(A) on fabrique, dans une première étape de polymérisation ou de polycondensation à des températures de 180 à 300°C, une pression atmosphérique allant jusqu'à 3 x 10⁶ Pas (30 bar), des blocs de polyamide ou de copolyamide ayant une masse molaire moyenne en nombre dans la plage de 500 à 5000 g/mol, de préférence dans la plage de 750 à 2500 g/mol, avec une concentration en groupes terminaux amino d'au maximum 50 mMol/kg, le cas échéant en ajoutant le composant D, quand X = N dans la formule (III), et on dégaze, dans une deuxième étape, pendant au moins 0,5 heure à une pression de 50 mbar jusqu'à la pression atmosphérique pour la réduction de la teneur en eau,
(B) on ajoute des diols de polyalkyl(méth)acrylate α,ω-fonctionnalisés ayant une masse molaire moyenne en nombre dans la plage située entre 600 et 5000 g/mol, de préférence dans la plage située entre 900 et 2500 g/mol, sous forme de substance solide, de solution ou de masse fondue, conjointement avec la totalité ou une partie du composant diol (III), dans le cas où X = O dans la formule III, ou on fait réagir le cas échéant le composant (III), dans le cas où X = O dans la formule (III), avec le diol de polyalkyl(méth)acrylate de formule (I), dans le cas où R⁴= (3), dans une étape de condensation parallèle, pour donner un polyester diol et
(C) on finit de condenser le mélange réactionnel à une température de 180 à 300°C, en présence de 0,05 à 0,2% en poids d'un catalyseur, dans une étape ultérieure de polycondensation sous pression réduite, pour donner un copolymère à bloc (A) de poids moléculaire élevé,
(D) on extrait ou on continue à transformer en corps moulés.

8. Utilisation des copolymères à blocs thermoplastiques selon une ou plusieurs des revendications précédentes 1 à 6 pour la fabrication de fibres, de feuilles, de corps moulés et d'adhésifs fusibles.

9. Utilisation des copolymères à blocs thermoplastiques selon une des revendications précédentes 1 à 6 à titre d'agents adhésifs ou agents de compatibilité dans des coextrudats à base de (co)polyamide et de polyalkyl(méth)acrylate.

10. Utilisation des copolymères à blocs thermoplastiques selon une des revendications précédentes 1 à 6 à titre d'agents adhésifs ou agents de compatibilité dans des coextrudats à base de (co)polyamide et de polycarbonate.

11. Composite multicouche thermoplastique se composant de
(a) au moins une couche constituée d'une masse moulée à base de (co)polyamide,
(b) au moins une couche constituée d'une masse moulée en matériau thermoplastique, choisi dans le groupe constitué des polyalkyl(méth)acrylates et polycarbonates, où les polyalkyl(méth)acrylates sont des homopolymères et des copolymères, dans lesquels jusqu'à 50% en mole de l'alkyl(méth)acrylate peuvent être remplacés par d'autres monomères provenant du groupe constitué par le méthacrylate de butyle, l'acrylate de butyle, l'acide méthacrylique, l'acide itaconique, le styrène, l'anhydride d'acide maléique, des fluoropolymères ou des polymères perfluorés ou mélanges des composés cités et
(c) au moins une couche située entre (a) et (b) à base d'un mélange des polymères constituant les couches (a) et (b), où au moins une partie du mélange
ou le mélange total peut se composer des copolymères à blocs thermoplastiques selon l'une ou plusieurs des revendications 1 à 6.

12. Composite multicouches thermoplastique selon la revendication 11, **caractérisé en ce que** la au moins une couche constituée d'une masse moulée à base de (co)polyamide est une couche constituée d'une masse moulée à base de polyamide 12, des copolymères de polyamide 12, d'un alliage de polymère se composant à base d'un polyamide 12 ou d'une couche constituée d'un polyamide amorphe ou d'un alliage polymère à base d'un polyamide amorphe.

13. Composite multicouche selon la revendication 11, **caractérisé en ce que** la au moins une couche constituée d'une masse moulée à base de (co)polyamide est un polyamide amorphe constitué de motifs monomères d'acide téréphtalique et du mélange d'isomères constitué de 2,2,4- et 2,4,4-triméthylhexaméthylène diamine, le copolyamide d'acide isophtalique, de 3,3'-diméthyl-4,4'-diaminodicyclohexylméthane et de lactame laurique ainsi que le polyamide constitué d'acide 1,12-dodécanedicarboxylique et de 4,4'-diaminodicyclohexylméthane ou de 3,3'-diméthyl-4,4'-diaminodicyclohexyl-méthane.

14. Composite multicouche thermoplastique selon la revendication 11, **caractérisé en ce que** le polyalkyl(méth)acrylate de la couche (b) est un polyalkylméthacrylate ayant de 1 à 12 atomes de carbone dans la chaîne carbonée du radical alkyle, qui est le cas échéant partiellement ou entièrement fluoré, le polyméthacrylate de méthyle et le polyméthacrylate de butyle étant préférés.

15. Composite multicouche thermoplastique selon les revendications 1 à 14, **caractérisé en ce qu'**il est un boîtier ou une partie boîtier d'un téléphone mobile.

16. Composite multicouche thermoplastique selon une ou plusieurs des revendications 1 à 14, **caractérisé en ce qu'**il est une conduite de tuyau souple ou de tube polymère multicouche, qui est ondulée le cas échéant au moins dans une zone partielle.

17. Conduite de tuyau souple ou de tube multicouche selon la revendication 16, **caractérisée en ce qu'**elle se compose au moins d'une couche interne en fluoropolymère transformable sur le plan thermoplastique, d'une couche externe en polyamide, le polyamide 12 ou les dérivés de polyamide 12 étant particulièrement préférés, et d'une couche d'adhésif intermédiaire à base des copolymères à blocs thermoplastiques selon l'une des revendications 1 à 6.

18. Conduite de tuyau souple ou de tube multicouche selon la revendication 16, **caractérisée en ce que** les fluoropolymères sont choisis parmi le fluorure de polyvinylidène (PVDF) ou les fluoropolymères à base de tétrafluoroéthylène (TFE), d'hexafluoropropylène (HFP) et de fluorure de vinylidène (VDF) ou les fluoropolymères de tétrafluoroéthylène (TFE), d'éther perfluorométhylvinylique (PMVE) et de fluorure de vinylidène (VDF), le PVDF ou un terpolymère de tétrafluoroéthylène, d'hexafluoropropylène, de fluorure de vinylidène étant préféré.

19. Composite multicouche selon l'une des revendications 11 à 17, **caractérisé en ce qu'**il a été fabriqué par extrusion par injection, calandrage ou soudure.

20. Veine optique avec un noyau fibreux et un guide d'ondes lumineuses en plastique présentant une gaine fibreuse constituée d'une ou de plusieurs couches, et au moins une enveloppe protectrice entourant le guide d'ondes, la gaine fibreuse ou au moins sa couche externe étant constituée d'un plastique fluoré et l'enveloppe protectrice étant constituée de polyamide, **caractérisée en ce que** l'enveloppe protectrice est constituée de polyamides ou de copolyamides ou de leurs mélanges, ayant un point de fusion en dessous de 220°C, et la gaine fibreuse est constituée de fluorure de vinylidène, de tétrafluoroéthène, d'hexafluoropropène, d'ester tétrafluoropropylique d'acide méthacrylique, d'ester pentafluoropropylique d'acide méthacrylique, d'ester trifluoroéthylique d'acide méthacrylique, d'ester heptadécafluorodécylique d'acide méthacrylique ainsi que des mélanges ou des copolymères des substances citées, au choix aussi de polymères modifiés par un acide acrylique et acrylate, de copolymères ou mélanges de polymères, et l'adhérence entre la gaine fibreuse et la couche protectrice est créée par les copolymères à blocs thermoplastiques selon l'une des revendications 1 à 6.
